# EUROPEAN PATENT APPLICATION

(11) **EP 4 572 163 A1**
(43) Date of publication of application: **18.06.2025**
(21) Application number: 22955043.9
(22) Date of filing: 12.08.2022
(51) Int. Cl.: H04B 7/0413

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN)
(74) Representative: Hoffmann Eitle
(86) International application number: PCT/JP2022/030763
(87) International publication number: WO 2024/034128

(57) **Abstract**

A terminal according to one aspect of the present disclosure includes a receiving section that receives downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH), and a control section that determines, based on the downlink control information, a DMRS associated with a PTRS shared by three or more PUSCH antenna ports in the TPMI or a DMRS associated with a PTRS shared by PUSCH antenna ports in each CDM group subset in the **TPMI.**

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP, registered trademark) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In existing radio communication systems (for example, Rel. 17), up to four layers or antenna ports (for example, DMRS antenna ports/PUSCH antenna ports) are supported in UL transmission (for example, uplink shared channel (PUSCH)). On the premise of up to four layers or antenna ports, a correspondence/association between an antenna port of a first signal and an antenna port of a second signal is defined. The first signal may be, for example, an uplink phase tracking reference signal (PTRS), and the second signal may be, for example, a demodulation reference signal (DMRS) for the PUSCH.

On the other hand, for future radio communication systems (for example, Rel. 18 or later versions/Beyond 5G or later versions/6G or later versions), it is assumed that more than four layers or antenna ports are supported.

However, in such a case, a problem is that how to control the correspondence between the antenna port of the first signal and the antenna port of the second signal. When the correspondence between the antenna port of the first signal and the antenna port of the second signal is not appropriately controlled, reduction in throughput or deterioration in communication quality may occur.

In view of this, the present disclosure has one object to provide a terminal, a radio communication method, and a base station that appropriately perform UL transmission even when the number of layers or the number of antenna ports used for UL transmission is expanded.

### Solution to Problem

A terminal according to one aspect of the present disclosure includes a receiving section that receives downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH), and a control section that determines, based on the downlink control information, a DMRS associated with a PTRS shared by three or more PUSCH antenna ports in the TPMI or a DMRS associated with a PTRS shared by PUSCH antenna ports in each CDM group subset in the TPMI.

### Advantageous Effects of Invention

According to an aspect of the present disclosure, it is possible to appropriately perform UL transmission even when the number of layers or the number of antenna ports used for UL transmission is expanded.

### Brief Description of Drawings

[FIG. 1] FIG. 1 is a diagram to show an example of association between precoder types and TPMI indices.
[FIG. 2] FIG. 2 shows an example of parameters for PDSCH DMRS configuration type 1.
[FIG. 3] FIG. 3 shows an example of parameters for PUSCH DMRS configuration type 1.
[FIG. 4] FIG. 4A and 4B are diagrams showing examples of PTRS-DMRS association fields in Rel. 16.
[FIG. 5] FIG. 5 is a diagram to show an example of association (or association candidates) of DMRS port-PUSCH antenna port-PTRS port.
[FIG. 6] FIG. 6 shows an example of a new DMRS port table for increasing the number of DMRS ports.
[FIG. 7] FIG. 7 shows another example of the new DMRS port table for increasing the number of DMRS ports.
[FIG. 8] FIG. 8 shows an example of a new DMRS port table for DMRS configuration type 1 according to choice 1 of option 1 of aspect 1.
[FIG. 9] FIG. 9 shows an example of a new DMRS port table for DMRS configuration type 2 according to choice 1 of option 1 of aspect 1.
[FIG. 10] FIG. 10 shows an example of a new DMRS port table for DMRS configuration type 1 according to choice 2 of option 1 of aspect 1.
[FIG. 11] FIG. 11 shows an example of a new DMRS port table for DMRS configuration type 2 according to choice 2 of option 1 of aspect 1.
[FIG. 12] FIG. 12 shows an example of a new DMRS port table according to case 1 of option 2 of aspect 1.
[FIG. 13] FIG. 13 shows an example of a new DMRS port table according to case 3 of option 2 of aspect 1.
[FIG. 14] FIG. 14 shows an example of a CDM group list for case 1 of aspect 2.
[FIG. 15] FIG. 15 shows an example of a CDM group list for case 2 of aspect 2.
[FIG. 16] FIG. 16 shows an example of a CDM group list for case 3 of aspect 2.
[FIG. 17] FIG. 17 shows an example of a CDM group list for case 4 of aspect 2.
[FIG. 18] FIG. 18 shows examples of existing antenna port tables for DMRS configuration type 1 and DMRS maximum length = 1.
[FIG. 19] FIG. 19 shows examples of group subsets for case 1 of aspect 4.
[FIG. 20] FIG. 20 shows examples of group subsets for case 2 of aspect 4.
[FIG. 21] FIG. 21 shows examples of group subsets for case 3 of aspect 4.
[FIG. 22] FIG. 22 shows examples of group subsets for case 4 of aspect 4.
[FIG. 23] FIG. 23 is a diagram to show an example of association (or association candidates) of DMRS port-PUSCH antenna port-PTRS port according to a first embodiment.
[FIG. 24] FIG. 24A and 24B are diagrams to show examples of PTRS-DMRS associated fields according to a second embodiment.
[FIG. 25] FIG. 25 is a diagram to show an example of a PTRS-DMRS association field according to the second embodiment.
[FIG. 26] FIG. 26 shows an example of an antenna port table for PDSCH, DMRS configuration type = 1, and DMRS maximum length = 1.
[FIG. 27] FIG. 27 is a diagram to show an example of a schematic structure of a radio communication system according to one embodiment.
[FIG. 28] FIG. 28 is a diagram to show an example of a structure of a base station according to one embodiment.
[FIG. 29] FIG. 29 is a diagram to show an example of a structure of a user terminal according to one embodiment.
[FIG. 30] FIG. 30 is a diagram to show an example of a hardware structure of the base station and the user terminal according to one embodiment.
[FIG. 31] FIG. 31 is a diagram to show an example of a vehicle according to one embodiment.

### Description of Embodiments

### (PUSCH Precoder)

For NR, it is under study that a UE supports at least one of codebook(CB)-based transmission and non-codebook(NCB)-based transmission.

For example, it is under study that the UE judges a precoder (precoding matrix) for at least one of CB-based and NCB-based uplink shared channel (Physical Uplink Shared Channel (PUSCH)) transmission by using at least a sounding reference signal (SRS) resource indicator (SRI).

In a case of CB-based transmission, the UE may determine the precoder for PUSCH transmission, based on an SRI, a transmitted rank indicator (TRI), a transmitted precoding matrix indicator (TPMI), and the like. In a case of NCB-based transmission, the UE may determine the precoder for PUSCH transmission, based on the SRI.

The SRI, the TRI, the TPMI, and the like may be reported to the UE by using downlink control information (DCI). The SRI may be specified by an SRS Resource Indicator field (SRI field) of the DCI or may be specified by a parameter "srs-ResourceIndicator" included in an RRC information element "ConfiguredGrantConfig" of a configured grant PUSCH. The TRI and the TPMI may be specified by a "precoding information and number of layers" field of the DCI.

The UE may report UE capability information related to a precoder type, and may be configured with the precoder type based on the UE capability information by higher layer signaling from a base station. The UE capability information may be information of the precoder type used by the UE in PUSCH transmission (which may be represented by an RRC parameter "pusch_TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), and the like.

The UE may determine the precoder to use for PUSCH transmission, based on precoder type information (which may be represented by an RRC parameter "codebookSubset") included in PUSCH configuration information ("PUSCH-Config" information element of RRC signaling) that is reported through higher layer signaling. The UE may be configured by codebookSubset with a subset of the PMIs specified by the TPMI.

Note that the precoder type may be specified by any one of full coherent (fully coherent, coherent), partial coherent, and non-coherent, or a combination of at least two of these (for example, which may be represented by parameters such as "fully and partial and non-coherent (fullyAndPartialAndNonCoherent)" and "partial and non-coherent (partialAndNonCoherent)").

Full coherent may mean that all antenna ports used for transmission are synchronized (which may be expressed as being able to match in phase, being able to control a phase for each coherent antenna port, being able to appropriately apply a precoder for each coherent antenna port, or the like). Partial coherent may mean that some of the antenna ports used for transmission are synchronized with each other, but the some ports are not synchronized with another port. Non-coherent may mean that the antenna ports used for transmission are not synchronized.

Note that the UE supporting a full-coherent precoder type may be assumed to support partial-coherent and non-coherent precoder types. The UE supporting a partial-coherent precoder type may be assumed to support a non-coherent precoder type.

The precoder type may be interpreted as coherency, PUSCH transmission coherence, a coherent type, a coherence type, a codebook type, a codebook subset, a codebook subset type, or the like.

The UE may determine a precoding matrix corresponding to a TPMI index obtained from DCI (e.g., DCI format 0_1, the same applies hereinafter) scheduling UL transmission from a plurality of precoders (which may be referred to as precoding matrices, codebooks, or the like) for CB- based transmission.

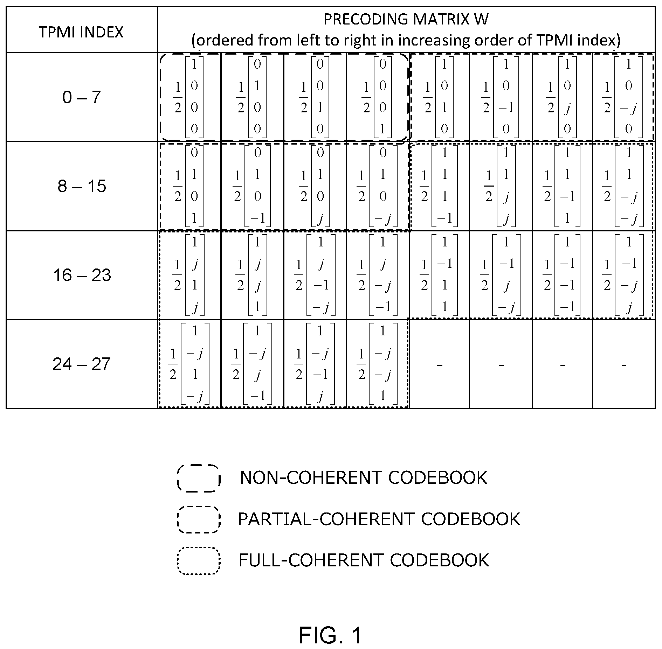

FIG. 1 is a diagram to show an example of association between precoder types and TPMI indices. FIG. 1 corresponds to a table of precoding matrices W for single-layer (rank-1) transmission using four antenna ports in DFT-s-OFDM (Discrete Fourier Transform spread OFDM, transform precoding is enabled).

In FIG. 1, when the precoder type (codebookSubset) is fully and partially and non-coherent (fullyAndPartialAndNonCoherent), the UE is notified of one of TPMIs from 0 to 27 for single layer transmission. When the precoder type is partially and non-coherent (PartialAndNonCoherent), the UE is configured with one of the TPMIs of from 0 to 11 for single-layer transmission. When the precoder type is non-coherent (nonCoherent), the UE is configured with one of the TPMIs of from 0 to 3 for single-layer transmission.

Note that as shown in FIG. 1, a precoding matrix in which only one element of each column is not 0 may be referred to as a non-coherent codebook. A precoding matrix in which only a given number (not all) of components of each column are not 0 may be referred to as a partial-coherent codebook. A precoding matrix in which none of the elements in each column is zero may be referred to as a full-coherent codebook.

The non-coherent codebook and the partial-coherent codebook may be referred to as antenna selection precoder. The full-coherent codebook may be referred to as a non-antenna selection precoder.

Note that, in the present disclosure, the partially coherent codebooks correspond to the codebooks (precoding matrix) corresponding to the TPMIs specified by the DCI for codebook-based transmission, for the UE configured with a partially coherent codebook subset (for example, an RRC parameter "codebookSubset" = "partialAndNonCoherent") excluding the codebooks corresponding to the TPMIs specified for the UE configured with a non-coherent codebook subset (for example, an RRC parameter "codebookSubset" = "nonCoherent") (in other words, for four-antenna-port single-layer transmission, the codebooks with TPMI = 4 to 11).

Note that, in the present disclosure, the fully coherent codebooks correspond to the codebooks (precoding matrix) corresponding to the TPMIs specified by the DCI for codebook-based transmission, for the UE configured with a fully coherent codebook subset (for example, an RRC parameter "codebookSubset" = "fullyAndPartialAndNonCoherent") excluding the codebooks corresponding to the TPMIs specified for the UE configured with a non-coherent codebook subset (for example, the RRC parameter "codebookSubset" = "partialAndNonCoherent") (in other words, for 4-antenna-port single-layer transmission, the codebooks with TPMI = 12 to 27).

### (DMRS)

A front-loaded DMRS (e.g., a DMRS used for demodulation of a PUSCH) is a first DMRS (a first symbol or a symbol near the first symbol) for earlier demodulation. An additional DMRS can be configured by RRC for a high-speed moving UE or a high modulation and coding scheme (MCS)/rank. The frequency location of the additional DMRS is the same as that of the front-loaded DMRS.

For the time domain, DMRS mapping type A or B is configured. In DMRS mapping type A, DMRS position l_0 is counted by a symbol index within a slot. l_0 is configured by a parameter (dmrs-TypeA-Position) in a MIB or a common serving cell configuration (ServingCellConfigCommon). DMRS position 0 (reference point l) means the first symbol of a slot or each frequency hop. In DMRS mapping type B, DMRS position l_0 is counted by the symbol index in a PDSCH/PUSCH. l_0 is always 0. DMRS position 0 (reference point l) means the first symbol of a PDSCH/PUSCH or each frequency hop.

The DMRS position is defined by a table in specifications and depends on the duration of the PDSCH/PUSCH. The position of the additional DMRS is fixed.

For the frequency domain, (PDSCH/PUSCH) DMRS configuration type 1 or 2 is configured. DMRS configuration type 1 has a comb structure and is applicable to both CP-OFDM (transport precoding = disabled) and DFT-S-OFDM (transport precoding = enabled). DMRS configuration type 2 is applicable only to CP-OFDM.

A single-symbol DMRS or a double symbol DMRS is configured.

The single-symbol DMRS is normally used (mandatory in Rel. 15). In the single-symbol DMRS, the number of additional DMRSs (symbols) is {0,1,2,3}. The single-symbol DMRS supports both cases where frequency hopping is enabled and disabled. When the maximum number (maxLength) in an uplink DMRS configuration (DMRS UplinkConfig) is not configured, a single-symbol DMRS is used.

The double-symbol DMRS is used for more DMRS ports (especially, MU-MIMO). In the double-symbol DMRS, the number of additional DMRSs (symbols) is {0,1}. The double-symbol DMRS supports a case where frequency hopping is disabled. When the maximum length (maxLength) in the uplink DMRS configuration (DMRS-UplinkConfig) is 2 (len2), whether the DMRS is the single-symbol DMRS or the double-symbol DMRS is determined by DCI or configured grant.

From the above, the following combinations are considered as the possible configuration patterns of the DMRS.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same RE (time and frequency resource) is referred to as a DMRS CDM group.

For DMRS configuration type 1 and single-symbol DMRS, four DMRS ports may be used. In each DMRS CDM group, two DMRS ports are multiplexed by an FD OCC having the length of 2. Two DMRS ports are multiplexed by FDM between a plurality of DMRS CDM groups (two DMRS CDM groups).

For DMRS configuration type 1 and single-symbol DMRS, eight DMRS ports may be used. In each DMRS CDM group, two DMRS ports are multiplexed by the FD OCC having the length of 2, and two DMRS ports are multiplexed by a TD OCC. Two DMRS ports are multiplexed by FDM between a plurality of DMRS CDM groups (two DMRS CDM groups) .

For DMRS configuration type 2 and single-symbol DMRS, six DMRS ports may be used. In each DMRS CDM group, two DMRS ports are multiplexed by the FD OCC having the length of 2. Three DMRS ports are multiplexed by FDM between a plurality of DMRS CDM groups (three DMRS CDM groups).

For DMRS configuration type 2 and single-symbol DMRS, 12 DMRS ports may be used. In each DMRS CDM group, two DMRS ports are multiplexed by the FD OCC having the length of 2, and two DMRS ports are multiplexed by the TD OCC. Three DMRS ports are multiplexed by FDM between a plurality of DMRS CDM groups (three DMRS CDM groups).

Although an example of DMRS mapping type B is shown here, the same applies to DMRS mapping type A.

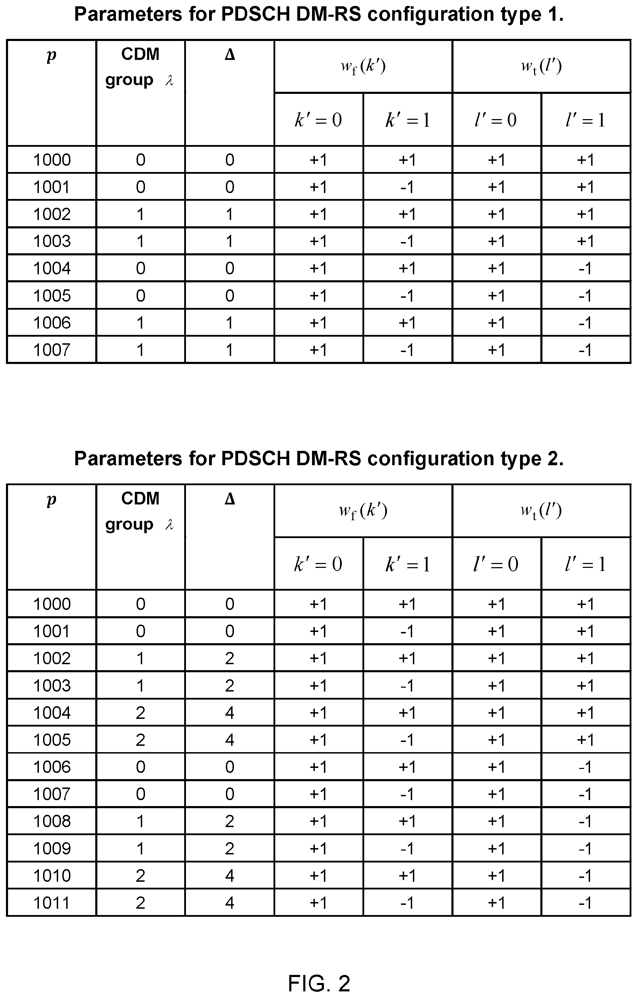

In parameters for PDSCH DMRS (existing table, existing DMRS port table, FIG. 2), DMRS ports 1000 to 1007 may be used for DMRS configuration type 1, and DMRS ports 1000 to 1011 may be used for DMRS configuration type 2.

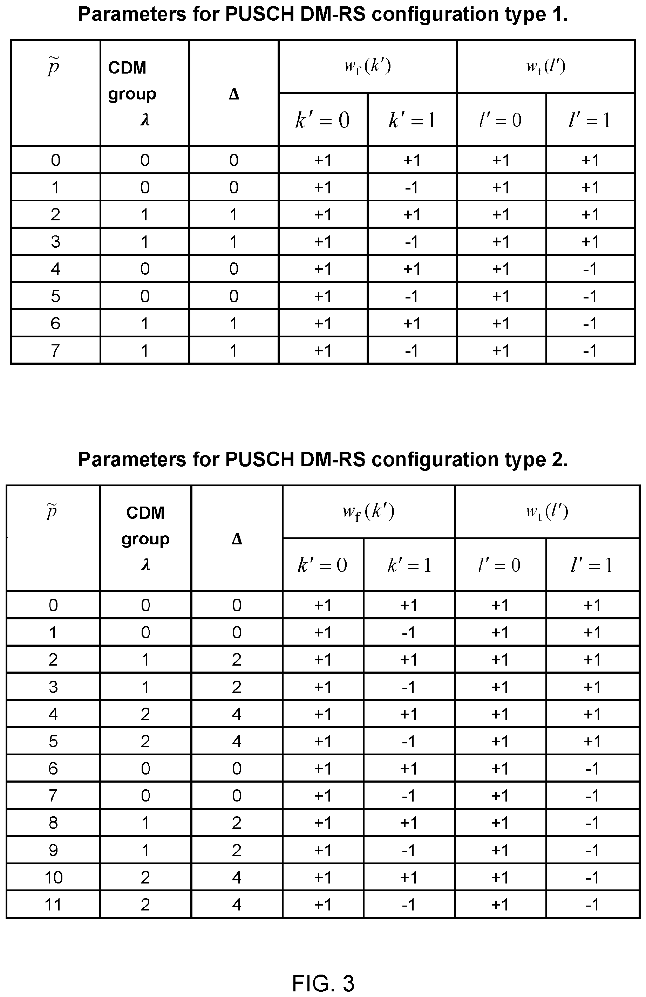

In parameters for PUSCH DMRS (existing table, existing DMRS port table, FIG. 3), DMRS ports 0 to 7 may be used for DMRS configuration type 1, and DMRS ports 0 to 11 may be used for DMRS configuration type 2.

### (Port of Reference Signal)

For orthogonalization of MIMO layers and the like, reference signals of a plurality of ports (for example, demodulation reference signals (DMRSs), CSI-RSs) are used.

For example, for single user MIMO (SU-MIMO), different DMRS ports/CSI-RS ports may be configured for each layer. For multi user MIMO (MU-MIMO), different DMRS ports/CSI-RS ports may be configured for each layer in one UE and for each UE.

Note that, when CSI-RS ports the number of which is larger than the number of layers used for data are used, a channel state more can be accurately measured based on the CSI-RSs, and it is expected that this contributes improvement of throughput.

In Rel-15 NR, a DMRS of a plurality of ports supports 8 ports at maximum in a case of type-1 DMRS (in other words, DMRS configuration type 1) and 12 ports at maximum in a case of type-2 DMRS (in other words, DMRS configuration type 2), by using frequency division multiplexing (FDM), frequency-domain orthogonal cover code (FD-OCC), time-domain OCC (TD-OCC), or the like.

In Rel-15 NR, a comb-shaped transmission frequency pattern (comb-shaped resource set) is used for the FDM. For the FD-OCC, a cyclic shift (CS) is used. The TD-OCC may be applied only to a double symbol DMRS.

The OCC of the present disclosure may be interpreted as an orthogonal code, orthogonalization, cyclic shift, or the like.

Note that the type of the DMRS may be referred to as a DMRS configuration type.

Among DMRSs, a DMRS applied with resource mapping in units of two continuous (adjacent) symbols may be referred to as a double-symbol DMRS, and a DMRS applied with resource mapping in units of one symbol may be referred to as a single-symbol DMRS.

Both types of DMRSs may be mapped to one or more symbols per slot depending on a length of a data channel. The DMRS mapped to a start position of a data symbol may be referred to as a front-loaded DMRS, and the DMRS additionally mapped to another position may be referred to as an additional DMRS.

In a case of DMRS configuration type 1 and single-symbol DMRS, Comb and CS may be used for orthogonalization. For example, up to four antenna ports (APs) may be supported by using two types of Comb and two types of CS (Comb2 + 2CS).

In a case of DMRS configuration type 1 and double-symbol DMRS, Comb, CS, and TD-OCC may be used for orthogonalization. For example, up to eight APs may be supported by using two types of Comb, two types of CS, and TD-OCC ({1, 1} and {1, - 1}).

In a case of DMRS configuration type 2 and single-symbol DMRS, FD-OCC may be used for orthogonalization. For example, up to six APs may be supported by applying an orthogonal code (2-FD-OCC) to two resource elements (REs) adjacent to each other in the frequency direction.

In a case of DMRS configuration type 2 and double-symbol DMRS, the FD-OCC and the TD-OCC may be used for orthogonalization. For example, up to 12 APs may be supported by applying the orthogonal code (2-FD-OCC) to two REs adjacent to each other in the frequency direction and applying the TD-OCC ({1, 1} and {1, - 1}) to two REs adjacent to each other in the time direction.

In Rel-15 NR, 32 ports at maximum are supported for CSI-RSs of a plurality of ports by using FDM, time division multiplexing (TDM), a frequency domain OCC, a time domain OCC, or the like. The similar method to that for the DMRS described above may be applied to orthogonalization of the CSI-RS.

A group of DMRS ports orthogonalized by the FD-OCC/TD-OCC as described above is also referred to as a code division multiplexing (CDM) group.

Different CDM groups are FDMed, and thus are orthogonal to each other. On the other hand, within the same CDM group, orthogonality of the applied OCCs may be lost due to channel variation or the like. In this case, when signals within the same CDM group are received with different received powers, a near-far resistant occurs, and orthogonality may not be secured.

Here, the TD-OCC/FD-OCC of the DMRS of Rel-15 NR is described. The DMRS mapped to a resource element (RE) may correspond to a sequence obtained by multiplying a DMRS sequence by an FD-OCC parameter (which may be referred to as a sequence element or the like) w_{f}(k') and a TD-OCC parameter (which may be referred to as a sequence element or the like) wₜ (l').

Each of the TD-OCC and the FD-OCC of the DMRS of Rel-15 NR correspond to an OCC with a sequence length (which may be referred to as an OCC length) = 2. Therefore, possible values of k' and l' are both 0 and 1. By multiplying the FD-OCC in units of RE, the DMRSs of two ports can be multiplexed using the same time and frequency resources (2 REs). When both the FD-OCC and the TD-OCC are applied, DMRSs of four ports can be multiplexed using the same time and frequency resources (4 REs).

The foregoing two existing DMRS port tables for the PDSCH correspond to DMRS configuration type 1 and DMRS configuration type 2, respectively. Note that p indicates the antenna port number, and Δ indicates a parameter for shifting (offsetting) the frequency resource.

For example, the antenna ports 1000 and 1001 are orthogonalized using the FD-OCC by applying {w_{f}(0), w_{f}(1)} = {+ 1, + 1} and {w_{f}(0), w_{f}(1)} = {+ 1, - 1}, respectively.

The antenna ports 1000 to 1001 and the antenna ports 1002 to 1003 (and the antenna ports 1004 to 1005 in the case of the type 2) are applied with different values of Δ, and thus FDM is applied to these antenna ports. Therefore, the antenna ports 1000 to 1003 (or 1000 to 1005) corresponding to the single-symbol DMRS are orthogonalized using the FD-OCC and FDM.

The type-1 antenna ports 1000 to 1003 and the antenna ports 1004 to 1007 are orthogonalized using the TD-OCC by applying {wₜ(0), wₜ(1)} = {+ 1, + 1} and {wₜ(0), wₜ(1)} = {+ 1, - 1}, respectively. Therefore, the antenna ports 1000 to 1007 (or 1000 to 1011) corresponding to the double-symbol DMRS are orthogonalized using the FD-OCC, the TD-OCC, and FDM.

For CP-OFDM only, defining a larger number of orthogonal DMRS ports for DL/UL MU-MIMO (without increasing DMRS overhead), a common design between DL and UL DMRSs, up to 24 orthogonal DMRS ports, and for each applicable DMRS configuration type, doubling the maximum number of orthogonal DMRS ports for both single-symbol DMRS and double-symbol DMRS are under study.

In Rel. 15, the following cases 1 to 4 can be configured.
[Case 1] Single-Symbol DMRS of DMRS Configuration Type 1
   The total number of DMRS ports is 2 (by comb/FDM) × 2 (by FD OCC) = 4 ports.
[Case 2] Double-Symbol DMRS of DMRS Configuration Type 1
   The total number of DMRS ports is 2 (by comb/FDM) × 2 (by FD OCC) × 2 (by TD OCC) = 8 ports.
[Case 3] Single-Symbol DMRS of DMRS Configuration Type 2
   The total number of DMRS ports is 3 (by FDM) × 2 (by FD OCC) = 6 ports.
[Case 4] Double-Symbol DMRS of DMRS Configuration Type 2
   The total number of DMRS ports is 3 (by comb) × 2 (by FD OCC) × 2 (by TD OCC) = 12 ports.

In Rel. 18 and later versions, it is studied to increase the total number of DMRS ports to 8, 16, 12, and 24 for cases 1, 2, 3, and 4, respectively.

### <PTRS>

In Rel-15 NR, a phase tracking reference signal (PTRS) is supported. The base station may transmit the PTRS in downlink. The base station may map the PTRS continuously or discontinuously in the time direction in a given number of subcarriers (for example, one subcarrier) and transmit the PTRS.

The UE may receive the PTRS in at least a part of a period (slot, symbol, or the like) in which a downlink shared channel (Physical Downlink Shared Channel (PDSCH)) is scheduled (in other words, a period in which the PDSCH is received), for example. The PTRS transmitted by the base station may be referred to as a DL PTRS.

The UE may transmit the PTRS in uplink. The UE may map the PTRS continuously or discontinuously in the time direction in a given number of subcarriers (for example, one subcarrier) and transmit the PTRS.

The UE may transmit the PTRS in at least a part of a period (slot, symbol, or the like) in which an uplink shared channel (Physical Uplink Shared Channel (PUSCH)) is scheduled (in other words, a period in which the PUSCH is received), for example. The PTRS transmitted by the UE may be referred to as a UL PTRS.

The base station or the UE may determine phase noise, based on the received PTRS, and correct a phase error of a received signal (e.g., a PUSCH, a PDSCH).

The UE may be configured with PTRS configuration information (PTRS-DownlinkConfig for DL and PTRS-UplinkConfig for UL) by using higher layer signaling. For example, the PTRS configuration information may be included in configuration information (DMRS-DownlinkConfig, DMRS-UplinkConfig) of a demodulation reference signal (DMRS) of the PDSCH or the PUSCH.

### <PTRS and DMRS>

In NR (e.g., Rel. 15), the DMRS ports associated with the PTRS ports are assumed to be QCL for QCL types A and D. In other words, when a given PTRS port is associated with a given DMRS port, the PTRS port and the DMRS port may be assumed to have a relationship of QCL types A and D.

In Rel-16 NR, it is supported that association between the PTRS port and the DMRS port (e.g., PTRS-DMRS association) is indicated by a given field of DCI. The given field may be referred to as a PTRS-DMRS association field or a PTRS-DMRS related field (e.g., a PTRS-DMRS association field).

Meanwhile, in Rel. 16/17, it is agreed to support up to two PTRS ports (a first PTRS port and a second PTRS port) for single-PDCCH-based multi-panel/TRP transmission. The number of applied/configured PTRS ports (e.g., one or two PTRS ports) may be configured/reported to the UE by higher layer parameters (e.g., maxNrofPorts in PTRS-UplinkConfig).

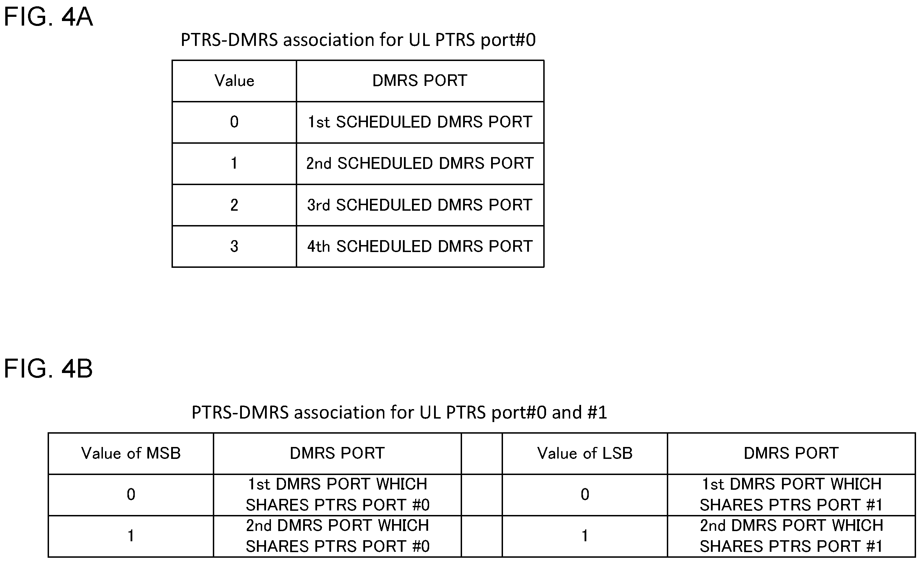

When one PTRS port (for example, PTRS port #0) is configured, the association between the PTRS and the DMRS may be determined based on a code point specified by the PTRS-DMRS association field of the DCI and correspondence (for example, a table) between each code point and the DMRS port. The correspondence (for example, a table) between each code point and the DMRS port may be defined in advance (see FIG. 4A).

In FIG. 4A, a case is shown where given DMRS ports correspond to the respective code points (here, 0 to 3) of the PTRS-DMRS association field (here, the first to fourth scheduled DMRS ports correspond to the respective code points).

When two PTRS ports (for example, PTRS port #0 and PTRS port #1) are configured, the association between each PTRS and DMRS may be determined based on the code point specified by the PTRS-DMRS association field of the DCI and the correspondence (for example, a table) between each code point and DMRS port. The correspondence (for example, a table) between each code point and the DMRS port may be defined in advance (see FIG. 4B).

For example, some of a plurality of code points (for example, the most significant bit (MSB)) may be used to specify the DMRS port for PTRS port #0, and the remaining code points (for example, the least significant bit (LSB)) may be used to specify the DMRS port for PTRS port #1.

In FIG. 4B, a case is shown where a first DMRS among DMRSs sharing PTRS #0 is specified when the MSB (here, 1 bit) is 0, and a second DMRS among DMRSs sharing PTRS #0 is specified when the MSB is 1. A case is also shown where the first DMRS among DMRSs sharing PTRS #0 is specified when the LSB (here, 1 bit) is 0, and the second DMRS among DMRSs sharing PTRS #0 is specified when the MSB is 1.

Information related to the DMRS (for example, the first DMRS/the second DMRS) that shares each PTRS (here, PTRS #0 and PTRS #1) may be defined in specifications in advance, or the UE may be explicitly or implicitly notified of the information from the base station to the UE by DCI/RRC.

For example, a PUSCH antenna port corresponding to each PTRS port may be defined/configured in advance, and the UE may be notified of given information related to the correspondence between the PUSCH antenna port and the DMRS port by DCI/RRC. The UE may judge the association between the DMRS port and the PTRS port, based on the information related to the correspondence between the DMRS port and the PUSCH antenna port of which the UE is notified from the base station and the predefined correspondence between the PUSCH antenna port and the PTRS port.

When the UE reports capability information supporting full-coherent UL transmission and UL-PTRS is configured, the UE may expect/assume that the number of UL PT-RS ports is configured to 1.

For partial-coherent and non-coherent codebook-based UL transmissions, the actual number of UL PTRS ports may be determined based on the transmitted precoding matrix indicator (TPMI) and/or the number of layers. The TPMI and/or the number of layers may be configured by a given field (for example, Precoding information and number of layers field (s)) of DCI (for example, DCI format 0_1/0_2) or a higher layer parameter (precodingAndNumberOfLayers).

When the higher layer parameter (maxNrofPorts in PTRS-UplinkConfig) is configured to a given value (e.g., n2), the transmission layer associated with the actual UL PT-RS port may be obtained from the indicated TMPI.

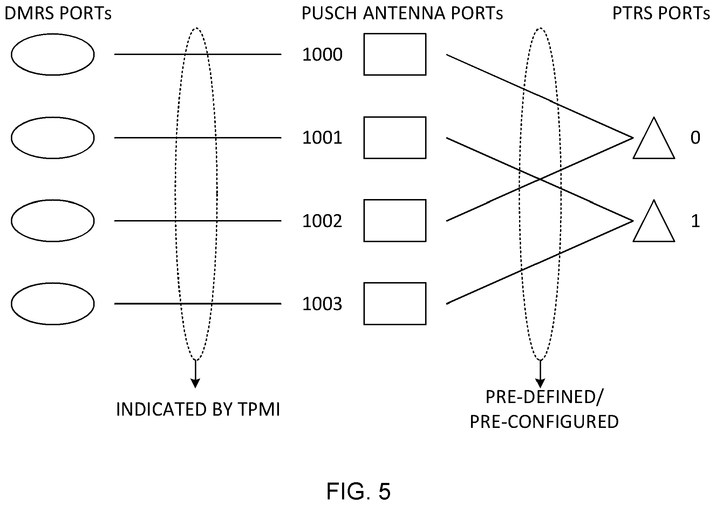

For example, it may be defined that the PUSCH antenna ports 1000 and 1002 in the indicated TPMI share PTRS port #0 and the PUSCH antenna ports 1001 and 1003 in the indicated TPMI share PTRS port #1 (see FIG. 5). The TPMI may be specified by a "precoding information and number of layers" field of the DCI.

UL PTRS port #0 may be associated with UL layer 'x' of a plurality of layers transmitted through the PUSCH antenna port 1000 and the PUSCH antenna port 1002 of the indicated TPMI. PTRS port #1 may be associated with UL layer 'y' of the plurality of layers transmitted through the PUSCH antenna port 1001 and the PUSCH antenna port 1003 of the indicated TPMI. X/y may be given by a PTRS-DMRS association field (e.g., FIG. 4B) included in DCI.

It may be defined in specifications that the PUSCH antenna ports 1000 and 1002 share PTRS port #0 and the PUSCH antenna ports 1001 and 1003 share PTRS port #1. Which layer/DMRS port is transmitted on which PUSCH antenna port may be indicated by the TPMI indicated by the base station. This may mean that the TPMI indicates which layers/DMRS ports share which PTRS ports. One layer/DMRS port among a plurality of layers/DMRS ports may be indicated to share a PTRS port by the PTRS-DMRS association field.

In this way, the number of UL PTRS ports may be configured to 1 for full-coherent UL transmission. For partial-coherent and non-coherent codebook-based UL transmissions, one or two UL PTRS ports may be configured. In a case where two PTRS ports are configured, the association between the PTRS and the DMRS may be determined based on the PTRS-DMRS association indication and the

### TPMI.

### (Analysis)

For future radio communication systems (for example, Rel. 18 or later versions/Beyond 5G or later versions/6G or later versions), it is assumed that UL transmission (for example, PUSCH) using more than four (for example, six, eight, nine or more) UL layers/antenna ports is supported. The antenna port may be, for example, a DMRS antenna port/a PUSCH antenna port/an SRS antenna port. Note that an antenna port and a port may be interchangeably interpreted.

As described above, in Rel. 18 and later versions, it is studied to respectively increase the total number of DMRS ports to 8, 16, 12, and 24 for Case 1 (4 ports)/Case 2 (8 ports) of configuration type 1 and Case 3 (6 ports)/Case 4 (12 ports) of configuration type 2 in Rel. 15.

When the number of DMRS ports is extended, it is under study to indicate the DMRS ports by introducing the concept of DCM group list/CDM group subset and indicating the list/group subset ID using DCI. For example, it is also conceivable that the DMRS ports 1008 to 1015 are added to configuration type 1 (the DMRS ports 1000 to 1015 are used), and the DMRS ports 1012 to 1023 are added to configuration type 2 (the DMRS ports 1000 to 1023 are used).

In association between the PTRS and the DMRS, in an existing system (e.g., Rel. 17 or before), association between the PTRS and the DMRS (e.g., DMRSs sharing a PTRS port) is defined/configured in consideration of a PUSCH of four layers or less. When the number of layers used for UL transmission (for example, PUSCH transmission) is greater than four (for example, 8-layer PUSCH transmission), a problem is how to associate the PTRS and the DMRS (Problem 1).

Alternatively, when the concept of CDM group list/CDM group subset is introduced for the extended number of DMRS ports, a problem is how to associate the PTRS and the DMRS (Problem 2).

Alternatively, when the number of UL transmission layers is expanded, a problem is how to associate a PTRS configuration and UE coherent assumption (Problem 3).

Thus, the inventors of the present invention have focused on Problems 1 to 3 described above when a UL transmission layer is extended, have studied a method to solve at least one of Problems 1 to 3 described above and came up with an idea of an aspect of the present embodiment.

Embodiments according to the present disclosure will be described in detail with reference to the drawings as follows. The radio communication methods according to respective embodiments may each be employed individually, or may be employed in combination.

Hereinafter, the "specific type" in the present disclosure will be described on the premise of ..., but is not limited thereto. In the present disclosure, "..." may mean any one of or a combination of "..." (i.e., "..." may be interpreted as any one of or a combination of "...").

In the present disclosure, "A/B" and "at least one of A and B" may be interchangeably interpreted. In the present disclosure, "A/B/C" may be interchangeably interpreted as "at least one of A, B, and C".

In the present disclosure, "notify," "activate," "deactivate," "indicate (or specify)," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, drop, stop, cancel, puncture, rate match, postpone, not transmit, and the like may be interchangeably interpreted.

### (Radio Communication Method)

In the present disclosure, a DMRS, a DL DMRS, a UL DMRS, a PDSCH DMRS, and a PUSCH DMRS may be interchangeably interpreted.

In each embodiment, an orthogonal sequence, an OCC, an FD OCC, and a TD OCC may be interchangeably interpreted.

In each embodiment, a DMRS port, an antenna port, and a port may be interchangeably interpreted. In each embodiment, a port index and a port number may be interchangeably interpreted. In each embodiment, a DMRS CDM group and a CDM group may be interchangeably interpreted. In each embodiment, an antenna port indication and an antenna port field may be interchangeably interpreted.

In each embodiment, a CDM group list and a list may be interchangeably interpreted. In each embodiment, a CDM group subset and a group subset may be interchangeably interpreted.

In each embodiment, a DMRS for PDSCH (DMRS port 1000 to 10xx) and a DMRS for PUSCH (DMRS port 0 to xx) may be interchangeably interpreted.

### Analysis 1

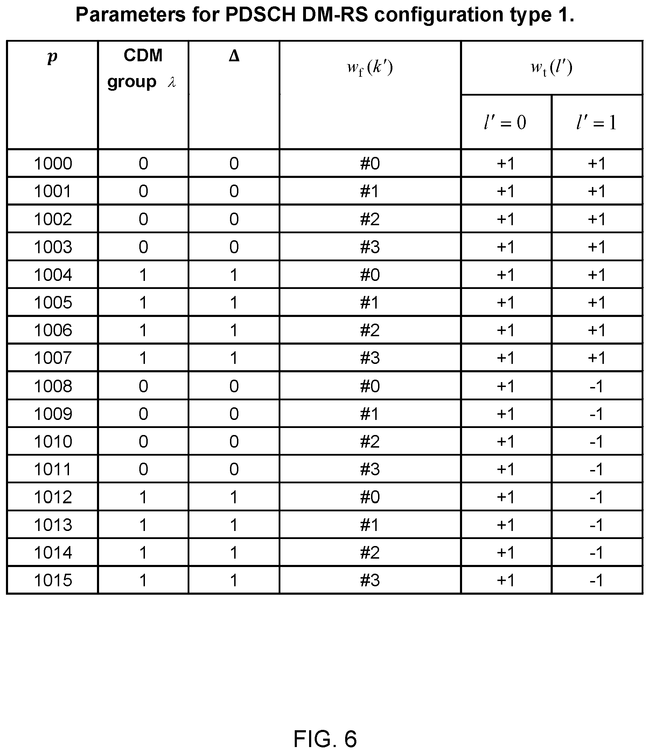

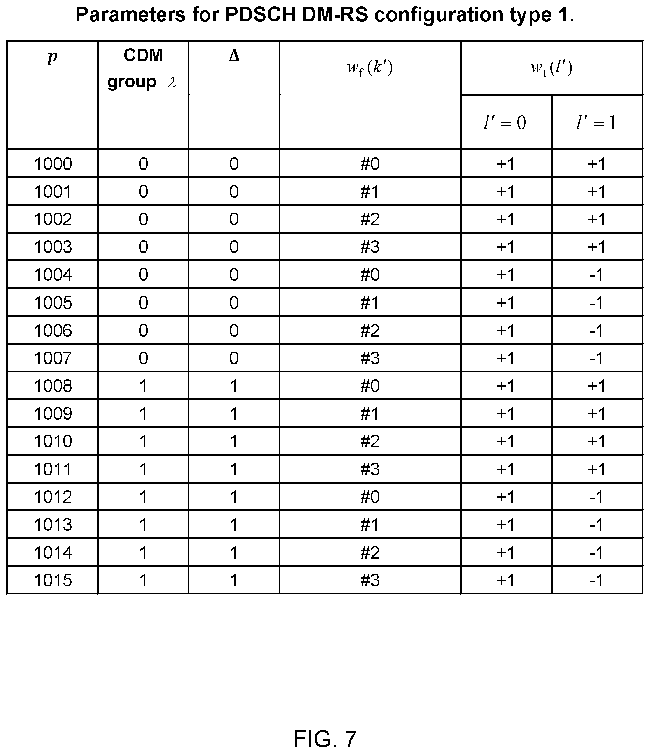

FIG. 6 shows an example of a new DMRS port table for increasing the number of DMRS ports for PDSCH DMRS configuration type 1. FIG. 7 shows another example of the new DMRS port table for increasing the number of DMRS ports for PDSCH DMRS configuration type 1. Using such a new DMRS port table and a new FD OCC W_{f}(k')/TD OCC Wₜ(l')/DMRS allocation enables increase in the number of DMRS ports from the number of existing DMRS ports. w_{f}(k') may have the same length as the existing FD OCC or may be longer than the existing FD OCC. w_{f}(k') may be a sequence having values of 0 and 1 or may be a sequence having a complex value. In the new DMRS port tables, a CDM group for new DMRS ports is the existing CDM group.

The UE may receive a configuration of DMRS and control transmission and reception of the DMRS, based on one or more associations between the plurality of CDM groups and the plurality of DMRS ports and the configuration. The number of CDM groups for DMRS configuration type 1 may be greater than two, and the number of CDM groups for DMRS configuration type 2 may be greater than three.

### [Aspect 1]

In cases 1 to 4 of Rel. 15, mapping of CDM group and DMRS port index is as follows.

### [Case 1]

Four ports and two CDM groups may be available. For a PUSCH, CDM group #0 may correspond to DMRS port indices {0, 1} and CDM group #1 may correspond to DMRS port indices {2, 3}. For a PDSCH, CDM group #0 may correspond to DMRS port indices {1000, 1001} and CDM group #1 may correspond to DMRS port indices {1002, 1003}.

### [Case 2]

Eight ports and two CDM groups may be available. For a PUSCH, CDM group #0 may correspond to DMRS port indices {0, 1, 4, 5} and CDM group #1 may correspond to DMRS port indices {2, 3, 6, 7}. For a PDSCH, CDM group #0 may correspond to DMRS port indices {1000, 1001, 1004, 1005} and CDM group #1 may correspond to DMRS port indices {1002, 1003, 1006, 1007}.

### [Case 3]

Six ports and three CDM groups may be available. For a PUSCH, CDM group #0 may correspond to DMRS port indices {0, 1}, CDM group #1 may correspond to DMRS port indices {2, 3}, and CDM group #2 may correspond to DMRS port indices {4, 5}. For a PDSCH, CDM group #0 may correspond to DMRS port indices {1000, 1001}, CDM group #1 may correspond to DMRS port indices {1002, 1003}, and CDM group #2 may correspond to DMRS port indices {1004, 1005}.

### [Case 4]

12 ports and three CDM groups may be available. For a PUSCH, CDM group #0 may correspond to DMRS port indices {0, 1, 6, 7}, CDM group #1 may correspond to DMRS port indices {2, 3, 8, 9}, and CDM group #2 may correspond to DMRS port indices {4, 5, 10, 11}. For a PDSCH, CDM group #0 may correspond to DMRS port indices {1000, 1001, 1006, 1007}, CDM group #1 may correspond to DMRS port indices {1002, 1003, 1008, 1009}, and CDM group #2 may correspond to DMRS port indices {1004, 1005, 1010, 1011}.

In Aspect 1, mapping of the CDM group and the DMRS port index may follow either the following options 1 or 2.

### <<Option 1>>

The UE may support a new CDM group for a new (more) DMRS port. In this case, the UE may support at least one of the following cases 1 to 4.

### [Case 1]

Eight ports may be available. Two CDM groups as in the existing DMRS port table may be maintained. For a PUSCH, CDM group #0 may correspond to DMRS port indices {0, 1} and CDM group #1 may correspond to DMRS port indices {2, 3}. For a PDSCH, CDM group #0 may correspond to DMRS port indices {1000, 1001} and CDM group #1 may correspond to DMRS port indices {1002, 1003}.

### [Case 2]

16 ports may be available. Four CDM groups may be available according to either options 1 or 2 below.

### [[Choice 1]]

Four CDM groups may be available by extension/addition of existing two CDM groups. For a PUSCH, CDM group #0 may correspond to DMRS port indices {0, 1, 4, 5}, CDM group #1 may correspond to DMRS port indices {2, 3, 6, 7}, CDM group #2 may correspond to DMRS port indices {8, 9, 10, 13}, and CDM group #3 may correspond to DMRS port indices {10, 11, 14, 15}. For a PDSCH, CDM group #0 may correspond to DMRS port indices {1000, 1001, 1004, 1005}, CDM group #1 may correspond to DMRS port indices {1002, 1003, 1006, 1007}, CDM group #2 may correspond to DMRS port indices {1008, 1009, 1012, 1013}, and CDM group #3 may correspond to DMRS port indices {1010, 1011, 1014, 1015}.

### [[Choice 2]]

Four CDM groups may be available due to a new mapping order.

### [Case 3]

12 ports may be available. Three CDM groups as in the existing DMRS port table may be maintained. For a PUSCH, CDM group #0 may correspond to DMRS port indices {0, 1, 6, 7}, CDM group #1 may correspond to DMRS port indices {2, 3, 8, 9}, and CDM group #2 may correspond to DMRS port indices {4, 5, 10, 11}. For a PDSCH, CDM group #0 may correspond to DMRS port indices {1000, 1001, 1006, 1007}, CDM group #1 may correspond to DMRS port indices {1002, 1003, 1008, 1009}, and CDM group #2 may correspond to DMRS port indices {1004, 1005, 1010, 1011}.

### [Case 4]

24 ports may be available. Six CDM groups may be available according to either options 3 or 4 below.

### [[Choice 3]]

Six CDM groups may be available by extension/addition of existing two CDM groups. For a PUSCH, CDM group #0 may correspond to DMRS port indices {0, 1, 6, 7}, CDM group #1 may correspond to DMRS port indices {2, 3, 8, 9}, CDM group #2 may correspond to DMRS port indices {4, 5, 10, 11}, CDM group #3 may correspond to DMRS port indices {12, 13, 18, 19}, CDM group #4 may correspond to DMRS port indices {14, 15, 20, 21}, and CDM group #5 may correspond to DMRS port indices {16, 17, 22, 23}. For a PDSCH, CDM group #0 may correspond to DMRS port indices {1000, 1001, 1006, 1007}, CDM group #1 may correspond to DMRS port indices {1002, 1003, 1008, 1009}, CDM group #2 may correspond to DMRS port indices {1004, 1005, 1010, 1011}, CDM group #3 may correspond to DMRS port indices {1012, 1013, 1018, 1019}, CDM group #4 may correspond to DMRS port indices {1014, 1015, 1020, 1021}, and CDM group #5 may correspond to DMRS port indices {1016, 1017, 1022, 1023}.

### [[Choice 4]]

Six CDM groups may be available due to a new mapping order.

An example of a PDSCH of choice 1/3 in case 2/4 will be described. The same applies to a PUSCH, except that the DMRS port index starts from 0.

The number of CDM groups is increased in at least one of a case where the number of DMRS ports for DMRS configuration type 1 is greater than 8 and a case where the number of DMRS ports for DMRS configuration type 2 is greater than 12.

In choice 1/3, for each DMRS configuration type, the same DMRS port index belongs to the same CDM group in both single-symbol DMRS and double-symbol DMRS, and thus a uniform DMRS port table for the single-symbol DMRS and the double-symbol DMRS may be defined.

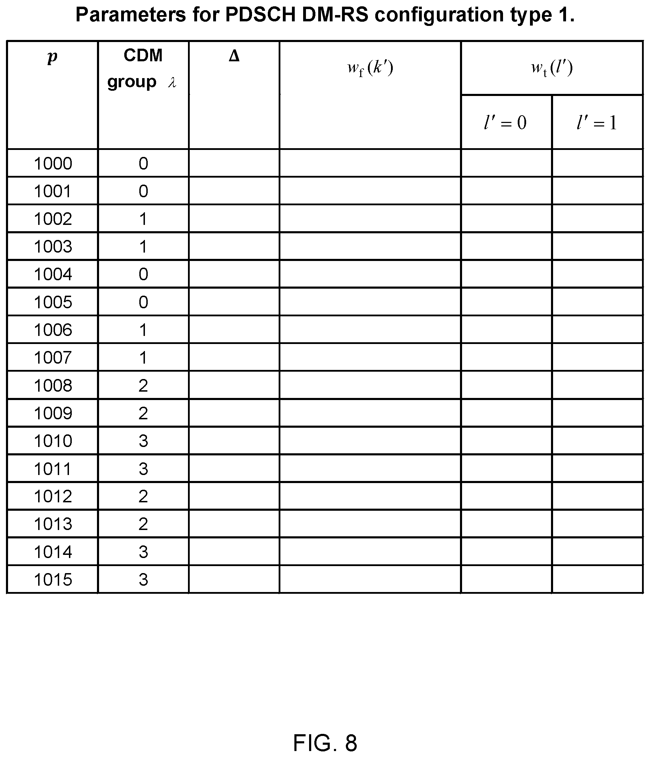

FIG. 8 shows an example of a new DMRS port table for DMRS configuration type 1 according to choice 1. In this example, the number of CDM groups is two even though the number of DMRS ports supported for DMRS configuration type 1 and single-symbol DMRS is increased to eight.

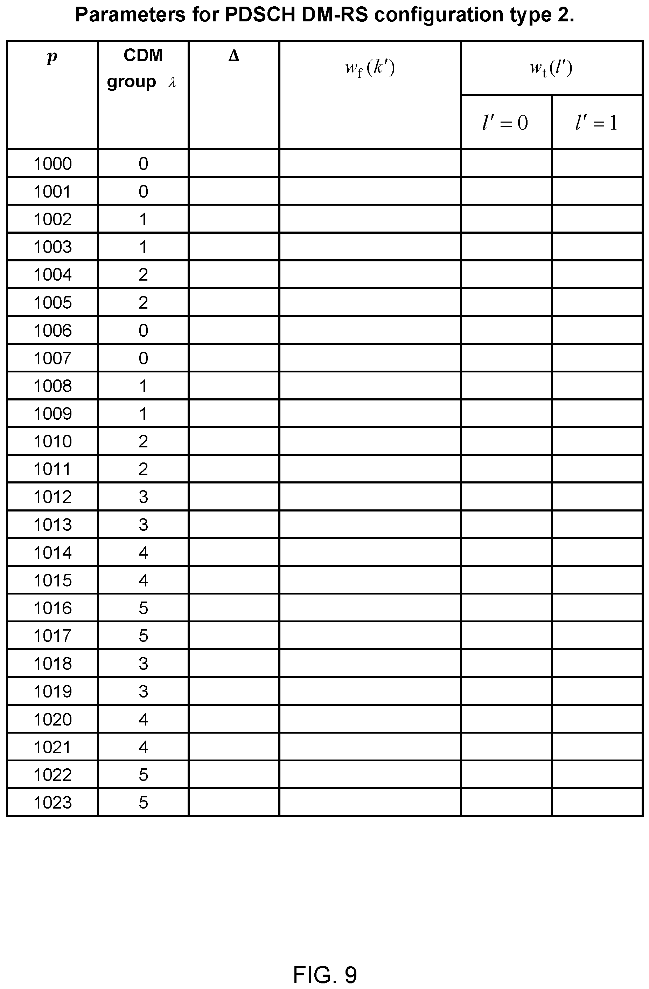

FIG. 9 shows an example of a new DMRS port table for DMRS configuration type 2 according to choice 1. In this example, the number of CDM groups is two even though the number of DMRS ports supported for DMRS configuration type 2 and single-symbol DMRS is increased to 12.

In choice 2/4 in the above-described case 2/4, a new mapping order of the DMRS CDM group and the DMRS port index may be defined.

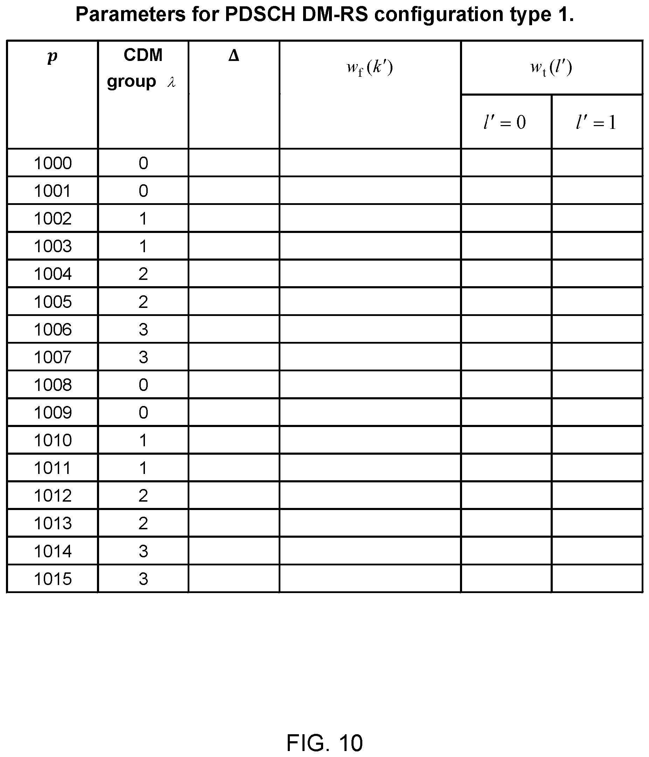

FIG. 10 shows an example of a new DMRS port table for DMRS configuration type 1 according to choice 2. For a PDSCH, CDM group #0 corresponds to DMRS port indices {1000, 1001, 1008, 1009}, CDM group #1 corresponds to DMRS port indices {1002, 1003, 1010, 1011}, CDM group #2 corresponds to DMRS port indices {1004, 1005, 1012, 1013}, and CDM group #3 corresponds to DMRS port indices {1006, 1007, 1014, 1015}.

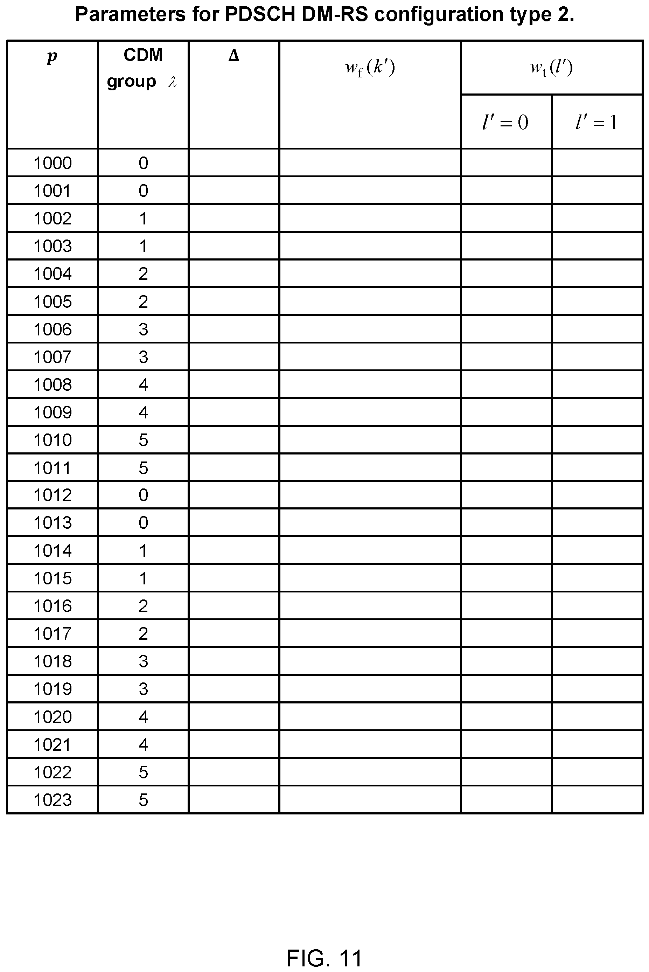

FIG. 11 shows an example of a new DMRS port table for DMRS configuration type 2 according to choice 2. For a PDSCH, CDM group #0 corresponds to DMRS port indices {1000, 1001, 1012, 1013}, CDM group #1 corresponds to DMRS port indices {1002, 1003, 1014, 1015}, CDM group #2 corresponds to DMRS port indices {1004, 1005, 1016, 1016}, CDM group #3 corresponds to DMRS port indices {1006, 1007, 1018, 1019}, CDM group #4 corresponds to DMRS port indices {1008, 1009, 1020, 1021}, and CDM group #5 corresponds to DMRS port indices {1010, 1011, 1022, 1023}.

In choice 2/4, for each DMRS configuration type, a uniform DMRS port table for the single-symbol DMRS and the double-symbol DMRS may be defined such that the same DMRS port index belongs to the same CDM group in both the single-symbol DMRS and the double-symbol DMRS.

### <<Option 2>>

The UE may support a new CDM group for enhanced DMRS configuration type 1/2 (e.g., Rel/18 DMRS configuration type 1/2). In this case, the UE may support at least one of the following cases 1 to 4.

### [Case 1]

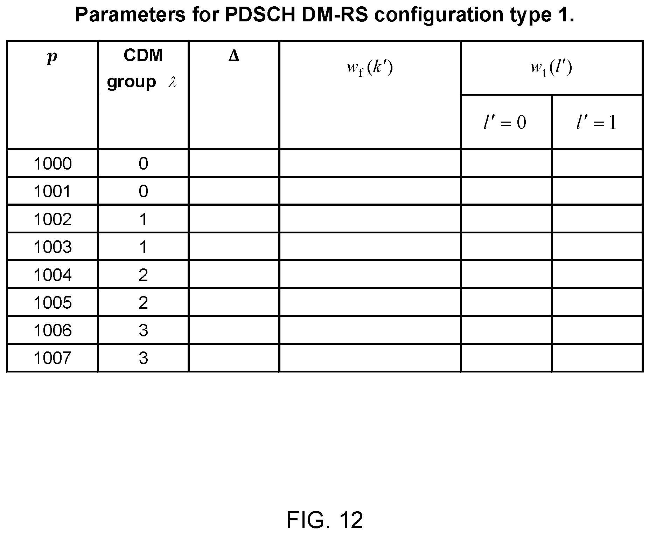

Eight ports may be available. Four CDM groups may be available. FIG. 12 shows an example of an example of a new DMRS port table. For a PUSCH, CDM group #0 may correspond to DMRS port indices {0, 1}, CDM group #1 may correspond to DMRS port indices {2, 3}, CDM group #2 may correspond to DMRS port indices {4, 5}, and CDM group #3 may correspond to DMRS port indices {6, 7}. For a PDSCH, CDM group #0 may correspond to DMRS port indices {1000, 1001}, CDM group #1 may correspond to DMRS port indices {1002, 1003}, CDM group #2 may correspond to DMRS port indices {1004, 1005}, and CDM group #3 may correspond to DMRS port indices {1006, 1007}.

### [Case 2]

16 ports may be available. Four CDM groups may be available. Mapping of the CDM group and the DMRS port index may be the same as the above-described choice 1/3 of case 2 of option 1.

### [Case 3]

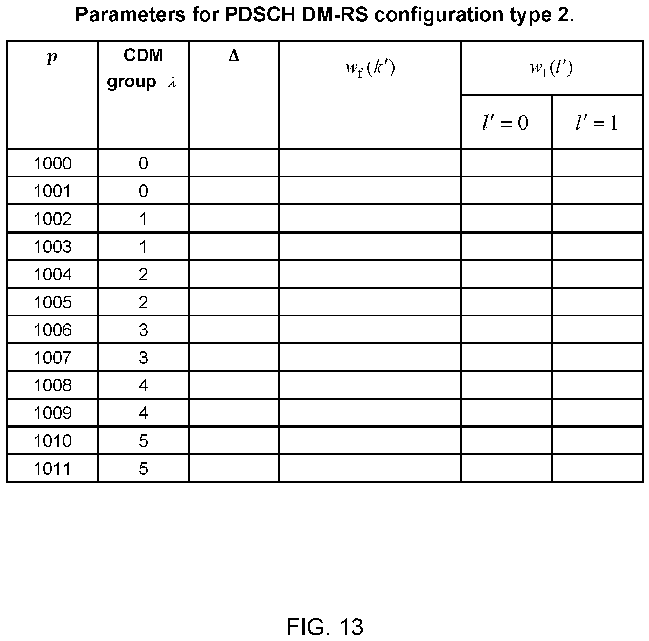

12 ports may be available. Six CDM groups may be available. FIG. 13 shows an example of an example of a new DMRS port table. For a PUSCH, CDM group #0 may correspond to DMRS port indices {0, 1}, CDM group #1 may correspond to DMRS port indices {2, 3}, CDM group #2 may correspond to DMRS port indices {4, 5}, CDM group #3 may correspond to DMRS port indices {6, 7}, CDM group #4 may correspond to DMRS port indices {8, 9}, and CDM group #5 may correspond to DMRS port indices {10, 11}. For a PDSCH, CDM group #0 may correspond to DMRS port indices {1000, 1001}, CDM group #1 may correspond to DMRS port indices {1002, 1003}, CDM group #2 may correspond to DMRS port indices {1004, 1005}, CDM group #3 may correspond to DMRS port indices {1006, 1007}, CDM group #4 may correspond to DMRS port indices {1008, 1009}, and CDM group #5 may correspond to DMRS port indices {1010, 1011}.

### [Case 4]

24 ports may be available. Six CDM groups may be available. Mapping of the CDM group and the DMRS port index may be the same as the above-described choice 2/4 of case 4 of option 1.

When option 2 is adopted for the single-symbol DMRS, this case may be adjusted as in choice 2/4. In this case, for each DMRS configuration type, a uniform DMRS port table for the single-symbol DMRS and the double-symbol DMRS may be defined such that the same DMRS port index belongs to the same CDM group in both the single-symbol DMRS and the double-symbol DMRS.

### [Aspect 2]

In the CDM group in option 1/2 of aspect 1, a new concept of a CDM group list (list) may be introduced at a higher layer of a CDM group. The number of CDM groups and the order of the CDM groups for each CDM group list may follow the existing DMRS port table. The CDM group list may support at least one of the following cases 1 to 4.

### [Case 1]

Eight ports may be available. Two CDM group lists may be available. There may be two CDM groups for each CDM group list. There may be two DMRS ports for each CDM group. List #1 may include CDM group {0, 1} and list #2 may include CDM group {2, 3}.

### [Case 2]

16 ports may be available. Two CDM group lists may be available. There may be two CDM groups for each CDM group list. There may be four DMRS ports for each CDM group. List #1 may include CDM group {0, 1} and list #2 may include CDM group {2, 3}.

### [Case 3]

12 ports may be available. Two CDM group lists may be available. There may be three CDM groups for each CDM group list. There may be two DMRS ports for each CDM group. List #1 may include CDM group {0, 1, 2} and list #2 may include CDM group {3, 4, 5}.

### [Case 4]

24 ports may be available. Two CDM group lists may be available. There may be three CDM groups for each CDM group list. There may be four DMRS ports for each CDM group. List #1 may include CDM group {0, 1, 2} and list #2 may include CDM group {3, 4, 5}.

For the DMRS ports per list, an order of the CDM groups in the existing DMRS port table may be reused. For a second list, a DMRS port index j in the DMRS port table may mean j + P. Here, P may be the number of DMRS ports in the list (the maximum number of DMRS ports in the list). For the second list, a DMRS CDM group index k in the DMRS port table may mean k + Q. Here, Q may be the number of DMRS CDM groups in the list (the maximum number of DMRS CDM groups in the list).

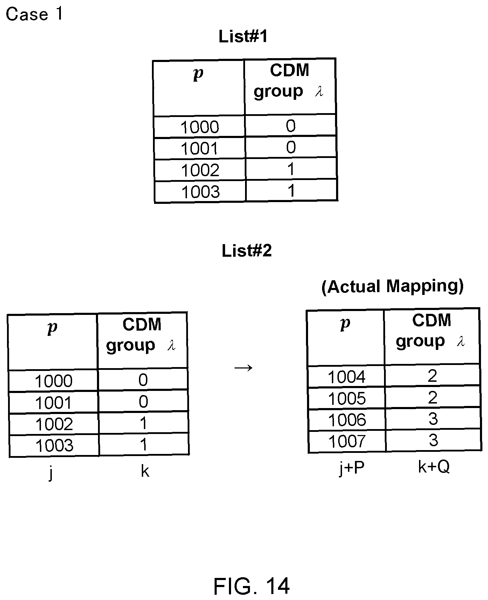

FIG. 14 shows an example of a CDM group list for case 1. In the DMRS port table, DMRS ports {1000, 1001, 1002, 1003} correspond to CDM groups {0, 0, 1, 1}, respectively. Mapping for list #1 is as the corresponding DMRS port table. For mapping for list #2, by applying P = 4 and Q = 2 to the DMRS port table, DMRS port j + P corresponds to CDM group k + Q.

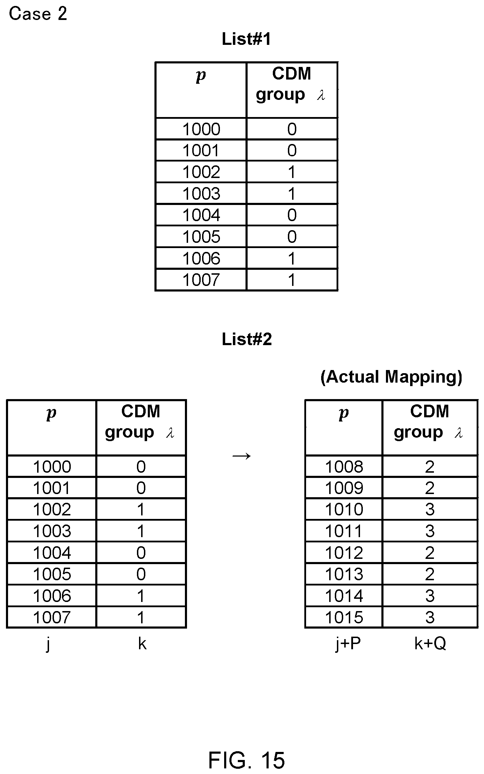

FIG. 15 shows an example of a CDM group list for case 2. In the DMRS port table, DMRS ports {1000, 1001, 1002, 1003, 1004, 1005, 1006, 1007} correspond to CDM groups {0, 0, 1, 1, 0, 0, 1, 1}, respectively. Mapping for list #1 is as the corresponding DMRS port table. For mapping for list #2, by applying P = 8 and Q = 2 to the DMRS port table, DMRS port j + P corresponds to CDM group k + Q.

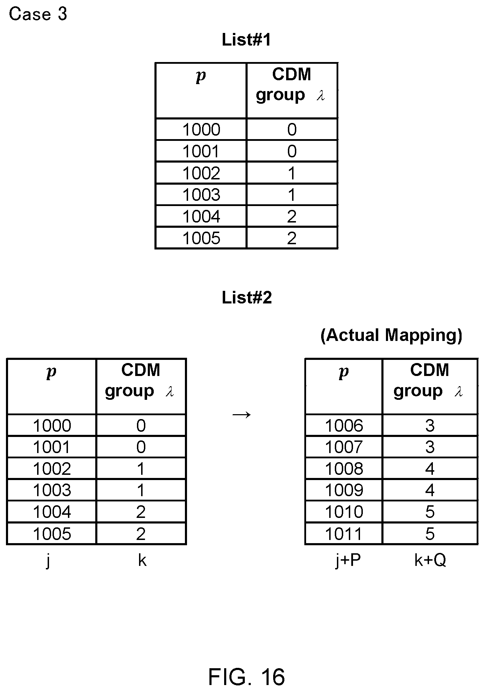

FIG. 16 shows an example of a CDM group list for case 3. In the DMRS port table, DMRS ports {1000, 1001, 1002, 1003, 1004, 1005} correspond to CDM groups {0, 0, 1, 1, 2, 2}, respectively. Mapping for list #1 is as the corresponding DMRS port table. For mapping for list #2, by applying P = 6 and Q = 3 to the DMRS port table, DMRS port j + P corresponds to CDM group k + Q.

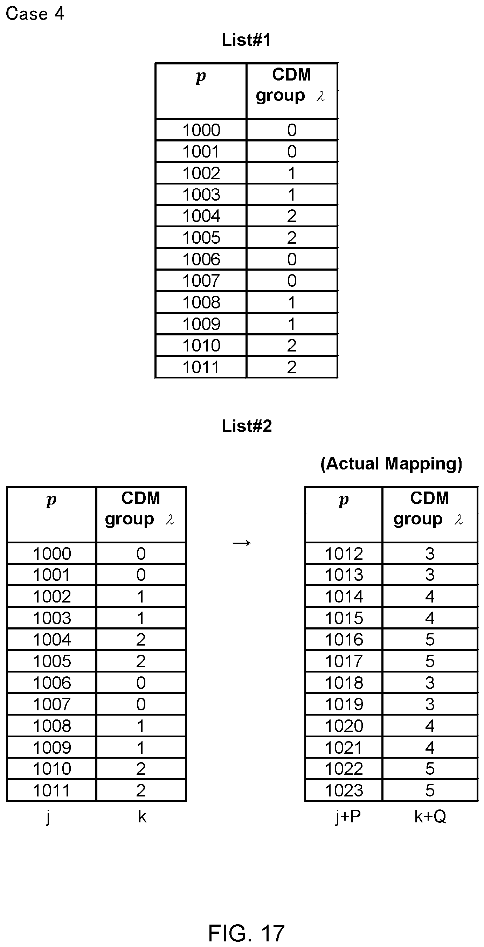

FIG. 17 shows an example of a CDM group list for case 4. In the DMRS port table, DMRS ports {1000, 1001, 1002, 1003, 1004, 1005, 1006, 1007, 1008, 1009, 1010, 1011} correspond to CDM groups {0, 0, 1, 1, 2, 2, 0, 0, 1, 1, 2, 2}, respectively. Mapping for list #1 is as the corresponding DMRS port table. For mapping for list #2, by applying P = 12 and Q = 3 to the DMRS port table, DMRS port j + P corresponds to CDM group k + Q.

### [Aspect 3]

Aspect 3 relates to reuse of an existing antenna port table for PUSCH. Aspect 3 may assume that Aspect 2 is used.

A new field (list indication field) for indicating at least one of whether one list is applied to a scheduled PUSCH or one list is applied (the number of lists, the number of lists for rate matching) and a list index may be added to DCI format 0_1/0_2 (for scheduling the PUSCH). For antenna port indication, an existing antenna port table may be reused for each list.

When the new field indicates one list, the existing antenna port table and the DMRS port index for indicating the antenna port may be used. By default, the one list may be the first list. When the new field indicates one list, the UE may not transmit data on REs indicated by DMRS REs in the first list (and may perform rate matching for the corresponding PUSCH around the REs indicated by the DMRS REs in the first list). When an antenna port field indicates a row with the number of CDM groups x, transmitting no data on the REs indicated by the DMRS REs in the first list may mean rate matching on all DMRS ports in x CDM groups in the first list.

Whether or not data is mapped to REs not used for DMRS may be indicated by DCI (scheduling the PUSCH/PDSCH) (similar to "the number of CDM groups without data" in Rel. 15). The number of CDM groups without data may be configured by higher layer signaling.

The number of lists may be configured by higher layer signaling. Other parameters such as the maximum number of DMRS ports, the maximum number of DMRS CDM groups may be configured by higher layer signaling, and the UE may determine the number of lists, based on the parameters.

When one list is indicated, this may mean that a user multiplexed with a UE scheduled with corresponding PUSCH/PDSCH occupies only the DMRS ports in the one list (list #1 by default). The UE may perform rate matching around the DMRS REs in the one list. When two lists are indicated, this may mean that the user multiplexed with the UE scheduled with corresponding PUSCH/PDSCH occupies the DMRS ports in the two lists. The UE may perform rate matching around the DMRS REs in the two list.

When the new field indicates one list, the new field may include a list index. When the new field indicates one list and a list index, the one list may be a list corresponding to the list index.

When the new field indicates two lists (lists #1 and #2), the new field may include a list index.

When the second list is indicated by the list index, the indicated DMRS port index j in the antenna port table may be regarded as DMRS port j + P. Here, P may be the maximum number of DMRS ports per list. The number of DMRS CDM groups without data {1, 2, 3} may refer to a CDM group in the second list.

When the first list is indicated by the list index, the indicated DMRS port index j in the antenna port table may be DMRS port j + P. The number of DMRS CDM groups without data {1, 2, 3} may refer to a CDM group in the first list.

When the new field indicates two lists, the UE may not transmit data on REs indicated by the DMRS REs in the two lists. The UE may follow either the following rate matching 1 or 2.

### [Rate Matching 1]

The UE performs rate matching around the DMRS REs in all DMRS ports in the two lists.

### [Rate Matching 2]

The UE performs rate matching around the DMRS REs in all DMRS ports in the first list and a DMRS port in the second list. An additional field (number of CDM groups field) may be added (to the DCI) to indicate the number of CDM groups in the second list for rate matching. The additional field may be applied only when the DMRS RE locations of the j-th port in the two lists are different from each other. When the second list is indicated by the list index, no additional field is needed and the UE may follow the antenna port field for the number of CDM groups for rate matching. When the first list is indicated by the list index, the additional field is enabled and the UE may follow the indicated number of CDM groups for rate matching.

For example, values of the new field may indicate the followings.
- The value 00 may indicate one list for rate matching and an antenna port indication (in list #1 by default) for the corresponding DMRS.
- The value 01 may indicate two lists for rate matching and the antenna port indication in list #1 for the corresponding DMRS.
- The value 10 may indicate two lists for rate matching and the antenna port indication in list #2 for the corresponding DMRS.
- The value 11 may be reserved.

As a variation, a list index may be required even when only one list is indicated. For example, values of the new field may indicate the followings.
- The value 00 may indicate one list for rate matching and the antenna port indication in list #1 for the corresponding DMRS.
- The value 01 may indicate one list for rate matching and the antenna port indication in list #2 for the corresponding DMRS.
- The value 10 may indicate two lists for rate matching and the antenna port indication in list #1 for the corresponding DMRS.
- The value 11 may indicate two lists for rate matching and the antenna port indication in list #2 for the corresponding DMRS.

In Embodiments #3 to #7, some new entries with DMRS port indices in lists #1 and #2 may be introduced. This makes instructions more flexible.

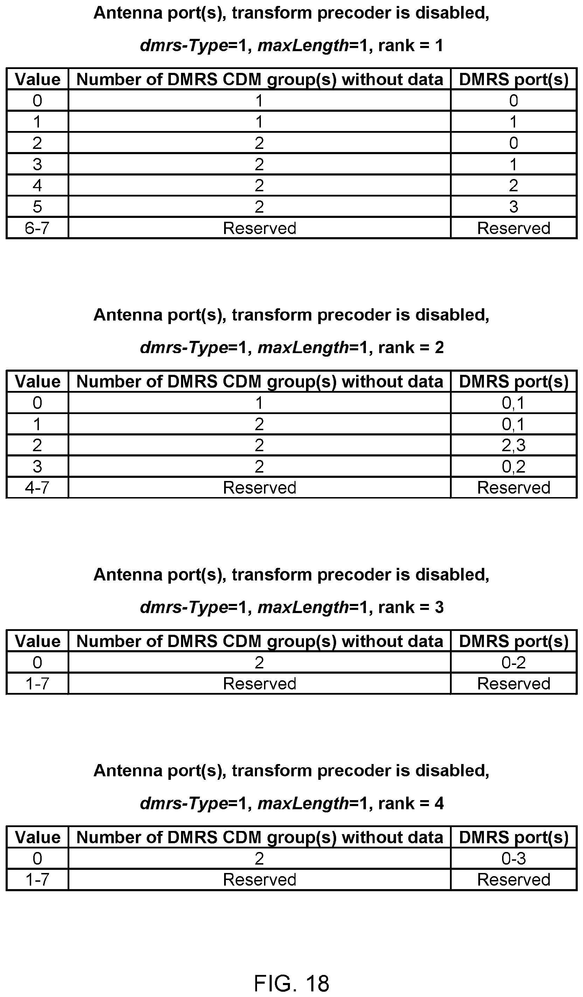

For example, in an example of an existing antenna port table (FIG. 18) for a PUSCH, DMRS configuration type 1, DMRS maximum length = 1, rank = 1, interpretation of the existing antenna port table may follow the followings.
- In list #1, the number of DMRS CDM groups 1 and 2 without data may refer to CDM groups {0} and {0,1}, respectively.
- In list #2, the number of DMRS CDM groups 1 and 2 without data may refer to CDM groups {2} and {2, 3} in list #2, respectively.
- When two lists are indicated and list #2 is indicated, the port index j may mean the j-th port in list #2. In case 1, the port index j may be the index j + P = j + 4 in list #2. For list #2, DMRS ports 0, 1, 2, and 3 may be interpreted as DMRS ports 4, 5, 6, and 7, respectively.

### Analysis 2

The number of DMRS ports per CDM group may be increased without increasing the number of DMRS CDM groups.

A problem is how mapping between the DMRS ports and the CDM groups is performed. In the following embodiments, it is considered to use existing mapping/ordering as much as possible.

A problem is how to use an existing antenna port table/existing DMRS port table for antenna port indication for a PDSCH/PUSCH. In the following embodiments, it is considered to use the existing antenna port table/existing DMRS port table as much as possible.

The UE may receive a configuration of DMRS and control transmission and reception of the DMRS on one or more associations between the plurality of CDM groups and the plurality of DMRS ports and the configuration. The number of DMRS ports for DMRS configuration type 1 may be greater than eight, and the number of DMRS ports for DMRS configuration type 2 may be greater than 12.

### [Aspect 4]

Aspect 4 relates to mapping of CDM groups and DMRS ports.

A new concept of a CDM group subset (group subset) may be introduced at a lower layer of the CDM group. The number of CDM groups and the order of the CDM groups for each CDM group subset may follow an existing DMRS port table. The CDM group subset may support at least one of the following cases 1 to 4.

### [Case 1]

Eight ports may be available. Two CDM groups may be available. There may be two group subsets for each CDM group. There may be four DMRS ports for each CDM group. Each of group subsets #1 and #2 may correspond to CDM group {0, 1}.

### [Case 2]

16 ports may be available. Two CDM groups may be available. There may be two group subsets for each CDM group. There may be eight DMRS ports for each CDM group. Each of group subsets #1 and #2 may correspond to CDM group {0, 1}.

### [Case 3]

12 ports may be available. Three CDM groups may be available. There may be two group subsets for each CDM group. There may be four DMRS ports for each CDM group. Each of group subsets #1 and #2 may correspond to CDM group {0, 1, 2}.

### [Case 4]

24 ports may be available. Three CDM groups may be available. There may be two group subsets for each CDM group. There may be eight DMRS ports for each CDM group. Each of group subsets #1 and #2 may correspond to CDM group {0, 1, 2}.

For each group subset, the order of CDM groups in the existing DMRS port table may be reused. For the second group subset, the DMRS port index j in the DMRS port table may indicate j + P. Here, P may be the number of DMRS ports in the group subset (the maximum number of DMRS ports in the group subset). For the first group subset, a DMRS port index j in the DMRS port table may indicate j.

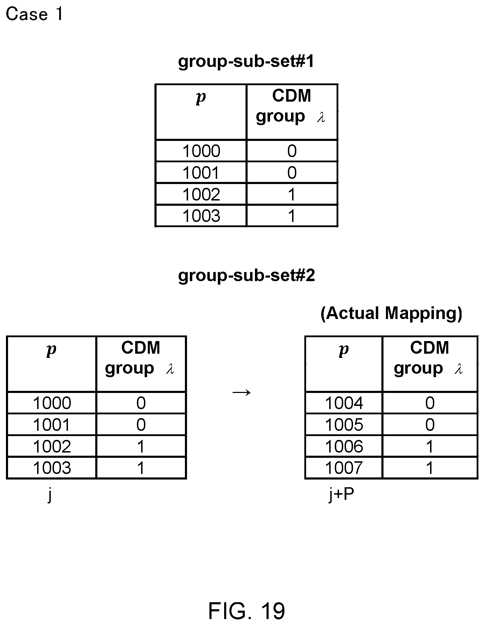

FIG. 19 shows examples of group subsets for case 1. In the DMRS port table, DMRS ports {1000, 1001, 1002, 1003} correspond to CDM groups {0, 0, 1, 1}, respectively. Mapping for group subset #1 is as the corresponding DMRS port table. The actual mapping for group subset #2 applies P = 4 to the DMRS port table, so that DMRS ports j + P = {1004, 1005, 1006, 1007} correspond to CDM groups {0, 0, 1, 1}, respectively.

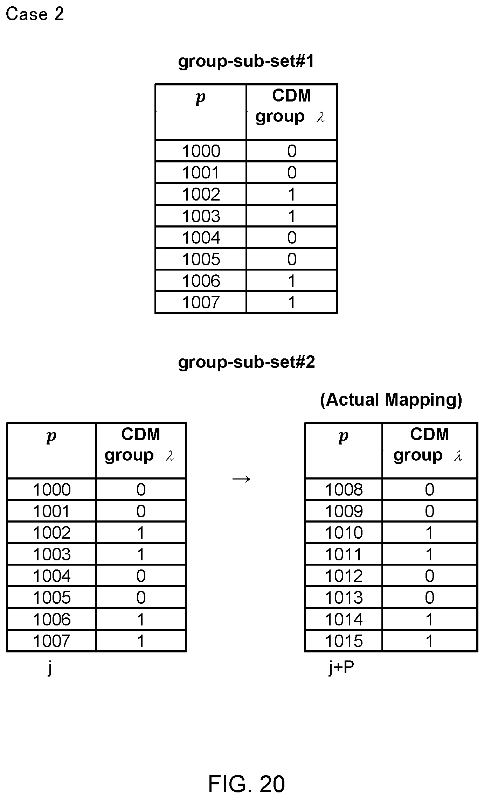

FIG. 20 shows examples of group subsets for case 2. In the DMRS port table, DMRS ports {1000, 1001, 1002, 1003, 1004, 1005, 1006, 1007} correspond to CDM groups {0, 0, 1, 1, 0, 0, 1, 1}, respectively. Mapping for group subset #1 is as the corresponding DMRS port table. The actual mapping for group subset #2 applies P = 8 to the DMRS port table, so that DMRS ports j + P = {1008, 1009, 1010, 1011, 1012, 1013, 1014, 1015} correspond to CDM groups {0, 0, 1, 1, 0, 0, 1, 1}, respectively.

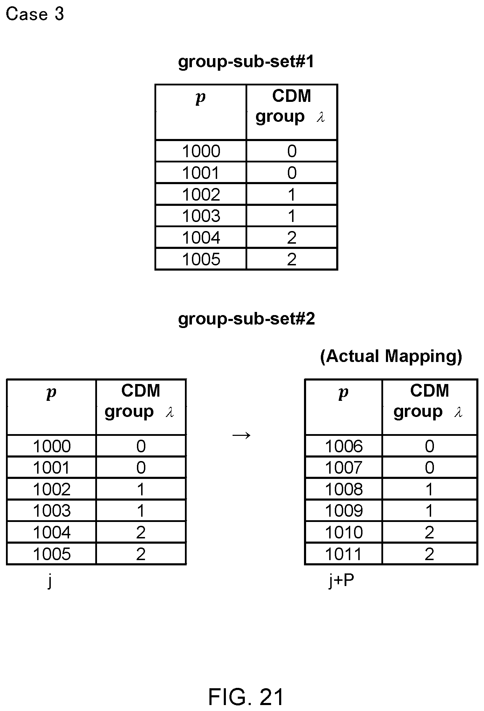

FIG. 21 shows examples of group subsets for case 3. In the DMRS port table, DMRS ports {1000, 1001, 1002, 1003, 1004, 1005} correspond to CDM groups {0, 0, 1, 1, 2, 2}, respectively. Mapping for group subset #1 is as the corresponding DMRS port table. The actual mapping for group subset #2 applies P = 6 to the DMRS port table, so that DMRS ports j + P = {1006, 1007, 1008, 1009, 1010, 1011} correspond to CDM groups {0, 0, 1, 1, 2, 2}, respectively.

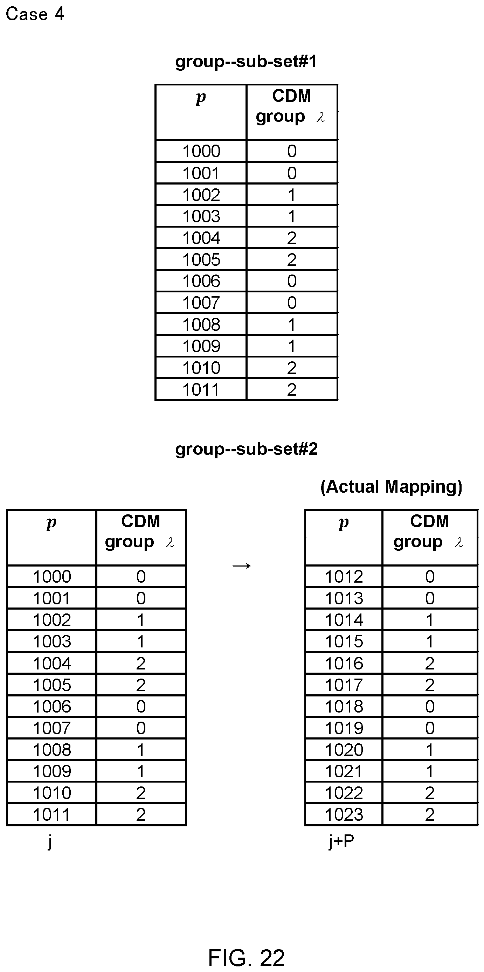

FIG. 22 shows examples of group subsets for case 4. In the DMRS port table, DMRS ports {1000, 1001, 1002, 1003, 1004, 1005, 1006, 1007, 1008, 1009, 1010, 1011} correspond to CDM groups {0, 0, 1, 1, 2, 2, 0, 0, 1, 1, 2, 2}, respectively. Mapping for group subset #1 is as the corresponding DMRS port table. The actual mapping for group subset #2 applies P = 12 to the DMRS port table, so that DMRS ports j + P = {1012, 1013, 1014, 1015, 1016, 1017, 1018, 1019, 1020, 1021, 1022, 1023} correspond to CDM groups {0, 0, 1, 1, 2, 2, 0, 0, 1, 1, 2, 2}, respectively.

### [Aspect 5]

Aspect 5 relates to reuse of an existing antenna port table.

A new field (group subset indication field) for indicating at least one of whether one group subset is applied to the scheduled PUSCH/PDSCH or one group subset is applied (the number of group subsets, the number of group subsets for rate matching) and the group subset index may be added to DCI format 0_1/0_2/1_1/1_2 (for scheduling the PUSCH/PDSCH). For the antenna port indication, the existing antenna port table may be reused for each group subset.

When the new field indicates one group subset, the existing antenna port table and the DMRS port index for antenna port indication may be used. By default, the one group subset may be the first group subset. When the new field indicates one group subset, the UE may not transmit/receive data on REs indicated by DMRS REs in the first group subset (rate matching may be performed for the corresponding PUSCH/PDSCH around the REs indicated by the DMRS REs in the first group subset). When the antenna port field indicates a row with the number of CDM groups x, transmitting/receiving no data on the REs indicated by the DMRS REs in the first group subset may mean rate matching on all DMRS ports in the x CDM groups in the first group subset.

Whether or not data is mapped to REs not used for DMRS may be indicated by DCI (scheduling the PUSCH/PDSCH) (similar to "the number of CDM groups without data" in Rel. 15). The number of CDM groups without data may be configured by higher layer signaling.

The number of group subsets may be configured by higher layer signaling. Other parameters such as the maximum number of DMRS ports, the maximum number of DMRS CDM groups may be configured by higher layer signaling, and the UE may determine the number of group subsets, based on the parameters.

When one group subset is indicated, this may mean that a user multiplexed with a UE scheduled with corresponding PUSCH/PDSCH occupies only DMRS ports in one group subset (group subset #1 by default). The UE may perform rate matching around the DMRS REs in the one group subset. When two group subsets are indicated, this may mean that the user multiplexed with the UE scheduled with corresponding PUSCH/PDSCH occupies DMRS ports in the two group subsets. The UE may perform rate matching around the DMRS REs in the two group subsets.

When the new field indicates one group subset, the new field may include a group subset index. When the new field indicates one group subset and group subset index, the one group subset may be a group subset corresponding to the group subset index.

When the new field indicates two group subsets (group subsets #1 and #2), the new field may include a group subset index.

When the second group subset is indicated by the group subset index, the indicated DMRS port index j in the antenna port table may be regarded as DMRS port j + P. Here, P may be the maximum number of DMRS ports per group subset. The number of DMRS CDM groups without data {1, 2, 3} may refer to the CDM groups in the second group subset.

When the first group subset is indicated by the group subset index, the indicated DMRS port index j in the antenna port table may be DMRS port j. The number of DMRS CDM groups without data {1, 2, 3} may refer to the CDM groups in the first group subset.

When the new field indicates two group subsets, the UE may not transmit/receive data on REs indicated by the DMRS REs in the two group subsets. The UE may follow either the following rate matching 1 or 2.

### [Rate Matching 1]

The UE performs rate matching around the DMRS REs in all DMRS ports in the two group subsets.

### [Rate Matching 2]

The UE performs rate matching around the DMRS REs in all DMRS ports in the first group subset and a DMRS port in the second group subset. An additional field (number of CDM groups field) may be added (in the DCI) to indicate the number of CDM groups in the second group subset for rate matching. The additional field may be applied only when the DMRS RE locations of the j-th port in the two group subsets are different from each other. When the second group subset is indicated by the group subset index, no additional field is required and the UE may follow the antenna port field for the number of CDM groups for rate matching. When the first group subset is indicated by the group subset index, the additional field is enabled and the UE may follow the indicated number of CDM groups for rate matching.

For example, values of the new field may indicate the followings.
- The value 00 may indicate one group subset for rate matching and an antenna port indication (in group subset #1 by default) for the corresponding DMRS.
- The value 01 may indicate two group subsets for rate matching and the antenna port indication in group subset #1 for the corresponding DMRS.
- The value 10 may indicate two group subsets for rate matching and the antenna port indication in group subset #2 for the corresponding DMRS.
- The value 11 may be reserved.

As a variation, a group subset index may be required even when only one group subset is indicated. For example, values of the new field may indicate the followings.
- The value 00 may indicate one group subset for rate matching and an antenna port indication in group subset #1 for the corresponding DMRS.
- The value 01 may indicate one group subsets for rate matching and the antenna port indication in group subset #2 for the corresponding DMRS.
- The value 10 may indicate two group subsets for rate matching and the antenna port indication in group subset #1 for the corresponding DMRS.
- The value 11 may indicate two group subsets for rate matching and the antenna port indication in group subset #2 for the corresponding DMRS.

### [Other Aspects]

This embodiment relates to a variation applicable to aspect 2/aspect 4.

In aspect 2, the j-th DMRS port in list #1 (port index j) and the j-th DMRS port in list #2 (port index j + P) can occupy the same DMRS RS (mapped to the same DMRS RS).

In aspect 4, the j-th DMRS port (port index j) in group subset #1 and the j-th DMRS port (port index j + P) in group subset #2 can occupy the same DMRS RS (mapped to the same DMRS RS).

In these situations, rate matching on the j-th DMRS port in one list/group subset may mean the same effect as rate matching on the j-th DMRS port in two list/group subsets. Rate matching on all DMRS ports in one list/group subset may mean the same effect as rate matching on all DMRS ports in two list/group subsets. In this case, the following variations may be applied.
- Indication of one list or two lists (one group subset or two group subsets) for rate matching may not be required.
- A new indication (new field) may be introduced to indicate the list index/group subset index of the antenna port indication. The antenna port indication may be interpreted based on the list index/group subset index.
- When the second list/group subset is indicated, the interpretation of the existing table may be similar to embodiments #8/#10/#12. In embodiments #8/#10, for the second list, the indicated DMRS port index j in the existing DMRS port table may be regarded as DMRS port j + P, and the number of CDM groups without data 1, 2, and 3 may indicate the CDM groups in the second list. In Embodiment #12, for the second group subset, the indicated DMRS port index j in the existing DMRS port table may be regarded as DMRS port j + P.
- Rate matching may be similar to existing specifications. When the antenna port field indicates a row with the number of CDM groups x, this may mean rate matching on all DMRS ports in the x CDM groups.

First to fourth embodiments will be described below. At least one of the first to fourth embodiments may be applied in combination with at least one of aspects 1 to 5 described above.

### <First Embodiment>

In a first embodiment, an example of association between a DMRS port and a PTRS port (for example, DMRS ports sharing the PTRS port) will be described in consideration of DMRS ports (for example, eight DMRS ports) for transmission (for example, UL 8-layer transmission) using an extended number of UL layers.

At least one of the following option 1-1 to option 1-2 may be applied to association between the DMRS port and the PTRS port (for example, the DMRS port sharing the PTRS port).

### [Option 1-1]

When a given higher layer parameter is configured (or a given value/given content is configured in the given higher layer parameter), a transmission layer associated with an actual UL PTRS port may be derived from the indicated TMPI as follows.

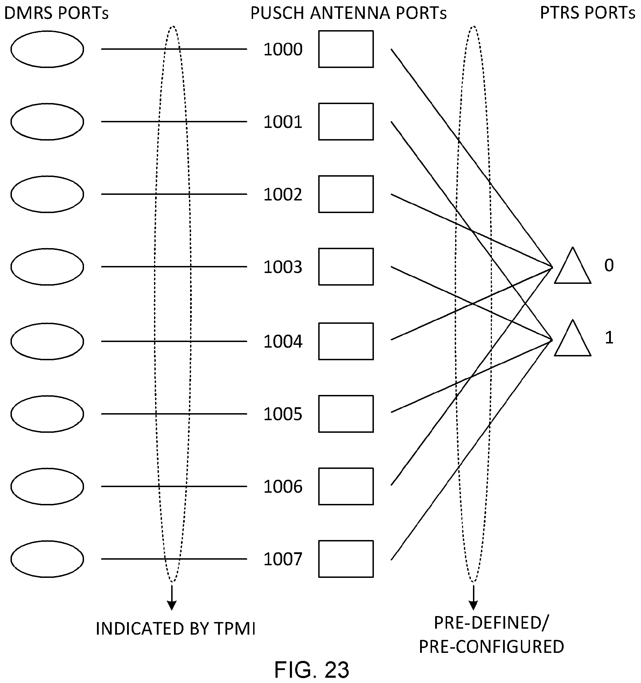

PUSCH antenna ports 1000, 1002, 1004 and 1006 (and + 100M) of the indicated TMPI may share a first PTRS port (e.g., PTRS port #0) (see FIG. 23). M may be an even number of eight or more. PUSCH antenna ports 1001, 1003, 1005, and 1007 (or + 100N) of the indicated TMPI may share a second PTRS port (e.g., PTRS port #1). N may be an odd number of nine or more.

The first PTRS port (e.g., PTRS port #0) may be associated with a UL layer 'x' among a plurality of layers transmitted through the PUSCH antenna port 1000, the PUSCH antenna port 1002, the PUSCH antenna port 1004, and the PUSCH antenna port 1006 (and + 100M) of the indicated TPMI. The second PTRS port (e.g., PTRS port #1) may be associated with a UL layer 'y' among a plurality of layers transmitted through the PUSCH antenna port 1001, the PUSCH antenna port 1003, the PUSCH antenna port 1005, and the PUSCH antenna port 1007 (and + 100N) of the indicated TPMI.

'x'/'y' may be indicated by a field (e.g., a PTRS-DMRS association field) included in DCI (e.g., DCI format 0_1/0_2).

The given higher layer parameter may be a higher layer parameter indicating the maximum number of configured UL PTRSs (e.g., maxNrofPorts in PTRS-UplinkConfig). For example, when a given value/given content (e.g., n2) is configured in maxNrofPorts, a UE may perform UL transmission by using a plurality of (e.g., two or more) UL PTRSs.

The UE may judge a DMRS port associated with first PTRS port #0 and a DMRS port associated with second PTRS port #1, based on a TMPI field and the PTRS-DMRS association field of the DCI.

As described above, by setting the number of PUSCH antenna ports capable of sharing one UL PTRS port to three or more (or four or more), even when the transmission layer of the PUSCH is extended, the transmission layer associated with the UL PTRS port can be appropriately controlled.

### [Option 1-2]

When a given higher layer parameter is configured (or a given value/given content is configured in the given higher layer parameter), the transmission layer associated with the actual UL PTRS port may be derived from the indicated TMPI as follows.

The PUSCH antenna ports 1000 and 1002 of the indicated TMPI (e.g., the PUSCH antenna ports 1000 and 1002 per CDM group list or per CDM group subset) may share the first PTRS port (e.g., PTRS port #0). The PUSCH antenna ports 1001 and 1003 of the indicated TMPI (e.g., the PUSCH antenna ports 1001 and 1003 per CDM group list or per CDM group subset) may share the second PTRS port (e.g., PTRS port #1).

The first PTRS port (e.g., PTRS port #0) may be associated with the UL layer 'x' among a plurality of layers transmitted through the PUSCH antenna port 1000 and the PUSCH antenna port 1002 (e.g., the PUSCH antenna ports 1000 and 1002 per CDM group list or per CDM group subset) of the indicated TPMI. The second PTRS port (e.g., PTRS port #1) may be associated with the UL layer 'y' among a plurality of layers transmitted through the PUSCH antenna port 1001 and the PUSCH antenna port 1003 (e.g., the PUSCH antenna ports 1001 and 1003 per CDM group list or per CDM group subset) of the indicated TPMI.

'x'/'y' may be indicated by a field (e.g., the PTRS-DMRS association field) included in the DCI (e.g., DCI format 0_1/0_2).

The given higher layer parameter may be the higher layer parameter indicating the maximum number of configured UL PTRSs (e.g., maxNrofPorts in PTRS-UplinkConfig). For example, when a given value/given content (e.g., n2) is configured in maxNrofPorts, the UE may perform UL transmission by using a plurality of (e.g., two or more) UL PTRSs.

The UE may judge the DMRS port associated with first PTRS port #0 and the DMRS port associated with second PTRS port #1, based on the TMPI field and the PTRS-DMRS association field of the DCI.

Option 1-2 may be applied when the concept of a CDM group list or a CDM group subset is introduced.

In this way, by configuring the PUSCH antenna ports per CDM group list/per CDM group subset to be able to share one UL PTRS port, even when the PUSCH transmission layer is extended (or when the CDM group list/CDM group subset is supported), it is possible to appropriately control the transmission layer associated with the UL PTRS port.

### [Variation]

Note that although option 1-1 and option 1-2 are described in connection with a case where two UL PTRS ports are configured/used, the present disclosure is not limited thereto and may be applied to a case where more than two (e.g., four) UL PTRS ports are configured/used.

As to the association between the DMRS port and the PTRS port, association configured by RRC may be applied, instead of association defined in specifications.

### <Second Embodiment>

In a second embodiment, an example of a PTRS-DMRS association field that can be applied in transmission (for example, UL 8-layer transmission) using the extended number of UL layers will be described. The second embodiment may be applied in combination with the first embodiment.

When UL PTRS transmission is performed in UL transmission of more than four layers, the UE may judge the association between the PTRS port and the DMRS port, based on the PTRS-DMRS association field included in the DCI and a CDM group list ID/CDM group subset ID.

The size (e.g., the number of bits) of the PTRS-DMRS association field may be the same as the size (e.g., two bits) of the PTRS-DMRS association field supported in the existing system (e.g., Rel. 16/17). Of course, the present disclosure is not limited to the above, and the size of the PTRS-DMRS association field may be extended compared to the existing system.

The CDM group list ID/CDM group subset ID may be indicated by the DCI including the PTRS-DMRS association field. For example, the PTRS-DMRS association field and a field used to indicate the CDM group list ID/CDM group subset ID may be included in the same DCI (e.g., DCI scheduling PUSCH transmission).

### [Option 2-1]

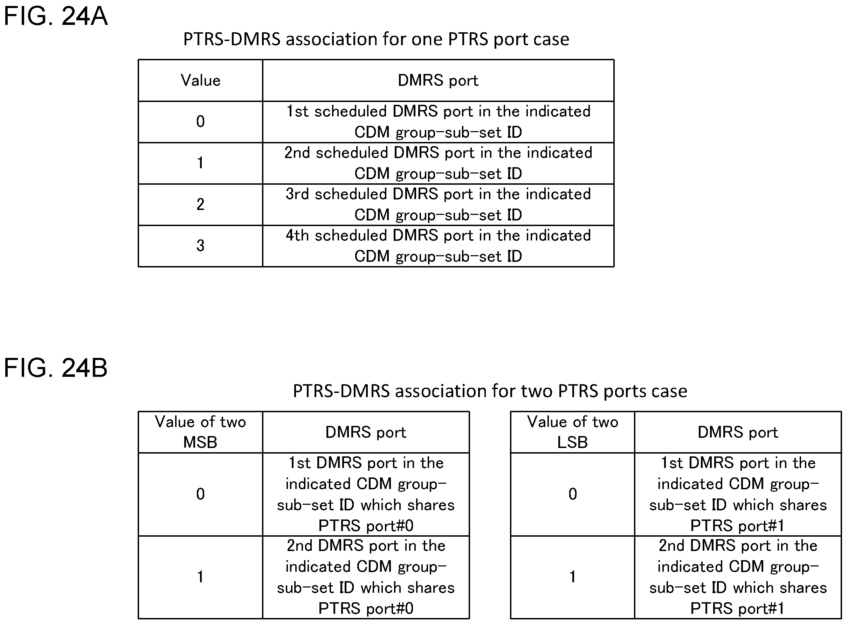

The contents (e.g., DMRS port) of the PTRS-DMRS association field of the existing system (e.g., Rel. 16/17) may be updated. For example, DMRS ports (or DMRS ports in a table) corresponding to a value (code point) of the PTRS-DMRS association field may be DMRS ports indicated by the CDM group list IDs/CDM group subset IDs (see FIGS. 24A and 24B).

FIG. 24A shows an example of association (or table) between a value (code point) of the PTRS-DMRS association field and each corresponding DMRS port when one PTRS port (e.g., PTRS port #0) is configured/applied.

The UE judges association between one PTRS port (here, #0) and the DMRS port, based on the PTRS-DMRS association field included in the DCI for scheduling a PUSCH and the CDM group list ID/CDM group subset ID indicated by the DCI. For example, in a case of a value of the PTRS-DMRS association field = 1 and the CDM group subset ID = 2, a DMRS port scheduled second in CDM group subset ID #2 may be associated with PTRS port #0.

FIG. 24B shows an example of association (or table) between a value (code point) of the PTRS-DMRS association field and each corresponding DMRS port when two PTRS ports (e.g., PTRS ports #0 and #1) is configured/applied.

The UE judges DMRS ports associated with two PTRS ports (here, #0 and #1), based on the PTRS-DMRS association field included in the DCI for scheduling the PUSCH and the CDM group list ID/CDM group subset ID indicated by the DCI.

The tables shown in FIGS. 24A and 24B are added to specifications of Rel. 18 and later versions, and may be applied to cases where a DMRS (or CDM group list ID/CDM group subset ID) that are newly added in Rel. 18 and later versions are configured.

Alternatively, the tables shown in FIGS. 24A and 24B may be overwritten on the existing tables. When a DMRS (or CDM group list ID/CDM group subset ID) newly added in Rel. 18 or later versions is not configured, CDM group list 0/CDM group subset 0 may be applied.

### [Option 2-2]

The contents (e.g., DMRS port) of the PTRS-DMRS association field of the existing system (e.g., Rel. 16/17) may be used without being updated/changed. In this case, each DMRS port (or each DMRS port in the table) corresponding to a value (code point) of the PTRS-DMRS association field may be interpreted as a DMRS port indicated by the CDM group list ID/CDM group subset ID.

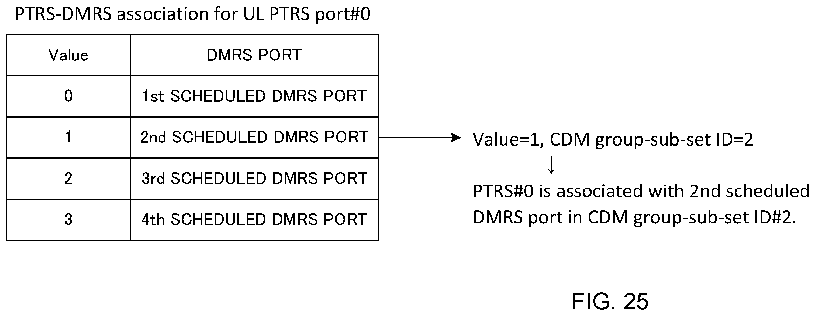

It is assumed that one PTRS port (e.g., PTRS port #0) is configured/applied, and for example, a value of the PTRS-DMRS association field = 1 and the CDM group subset ID = 2 are indicated (see FIG. 25). In this case, PTRS #0 may be associated with the DMRS port scheduled second in CDM group subset ID #2.

The CDM group list ID/CDM group subset ID may be indicated by the DCI including the PTRS-DMRS association field. When the CDM group list ID/CDM group subset ID is not indicated, a specific CDM group list ID/CDM group subset ID (e.g., ID = 0) may be applied. Alternatively, the association of the PTRS-DMRS of the existing system (for example, Rel. 16/17) may be applied.

### [Subset of Scheduled DMRS Port]

For each PTRS port, the associated DMRS port may be indicated only from a subset of scheduled DMRS ports. In this case, each code point of the PTRS-DMRS association field may be configured to correspond to any one of one or more DMRS ports included in the subset. The subset may be interpreted as a group, a combination, or a set.

The subset of scheduled DMRS ports may be DMRS ports from a given CDM group list ID/CDM group subset ID. For example, a DMRS port corresponding to a specific CDM group list ID/CDM group subset ID may be included in the subset. The specific CDM group list ID/CDM group subset ID may be defined in specifications or may be configured/indicated to the UE by RRC/MAC CE.

Association between the PTRS ports and the subset of scheduled DMRS ports may be configured by RRC/MAC CE.

The subset of DMRS ports may be determined based on a given rule/given condition/given parameter. For example, at least one of the following subset determinations 1-1 to 1-4 may be applied. Note that the correspondence between DMRS ports included in a subset and code points of a PTRS-DMRS association field may be defined in advance in specifications, or may be reported/configured to the UE by RRC/MAC CE/DCI.

### <Third Embodiment>

A third embodiment describes an example of association between a PTRS configuration and UE coherent assumption.

### [Analysis]

Considering that antenna ports sharing the same PTRS port mean the same phase tracking, it is conceivable that different number of PTRS ports (or different PTRS port numbers) may be configured for UEs having different coherent assumptions.

For example, coherent antenna ports have the same phase noise and can share the same single PTRS. On the other hand, for non-coherent/partial-coherent antenna ports, different PTRS are required for different antenna ports.

A UL PTRS port configuration (e.g., the number of PTRS ports) may be separately configured/applied for each coherent assumption (or coherent type). For example, the following PTRS port configurations may be applied to a full-coherent UE, a partial-coherent UE, and a non-coherent UE.

### [Full-Coherent UE]

When up to 8-layer transmission is configured/supported for a fully-coherent UE or fully-coherent codebook-based PUSCH transmission (fully-coherent CB-based PUSCH transmission), at least one of the following option 3-1 to option 3-2 may be applied.

### <<Option 3-1>>

One UL PTRS port may be always configured.

### <<Option 3-2>>

Configuration of two UL PTRS ports may be enabled/allowed. In this case, one UL PTRS port may be configured/applied per codeword (CW)/transport block (TB).

### [Partial-Coherent UE]

It is assumed that up to 8-layer transmission is configured/supported for a partial-coherent UE (partially-coherent UE) or partial-coherent codebook-based PUSCH transmission (partially-coherent CB-based PUSCH transmission).

When there are two coherent antenna port groups and each group has four coherent antenna ports, at least one of the following option 3-3 to option 3-4 may be applied.

### <<Option 3-3>>

Two UL PTRS ports may be always configured. In this case, one PTRS port may correspond to/be associated with each coherent antenna port group.

### <<Option 3-4>>

Configuration of one or two UL PTRS ports may be enabled/allowed. In this case, one UL PTRS port may be configured/applied per codeword (CW)/transport block (TB).

When there are four coherent antenna port groups and each group has two coherent antenna ports, at least one of the following option 3-5 to option 3-7 may be applied.

### <<Option 3-5>>

Four UL PTRS ports may be always configured. In this case, one PTRS port may correspond to/be associated with each coherent antenna port group.

### <<Option 3-6>>

Configuration of one or two UL PTRS ports may be enabled/allowed. In this case, a new four PTRS port configuration may not be required.

### <<Option 3-7>>

Configuration of one, two or four UL PTRS ports may be enabled/allowed.

When four-UL-PTRS configuration are supported, the association between the DMRS ports and the PTRS ports (e.g., the DMRS port sharing the PTRS port) described in the first embodiment may be applied in consideration of the four PTRS ports. This allows support of pre-defined/configured association between the DMRS ports and the UL PTRS ports 0, 1, 2, and 3.

### [Non-Coherent UE]

When up to 8-layer transmission is configured/supported for a non-coherent UE or non-coherent codebook-based PUSCH transmission (non-coherent CB-based PUSCH transmission), at least one of the following option 3-1 to option 3-7 may be applied. With this, a PTRS port configuration may be flexibly configured/applied according to a coherent type.

### <Fourth Embodiment>

A fourth embodiment describes the number of CDM groups of DMRSs without data (e.g., number of DMRS CDM group (s) without data) in a case where a CDM group list/CDM group subset is introduced/supported. Note that the fourth embodiment may be applied to UL/DL.

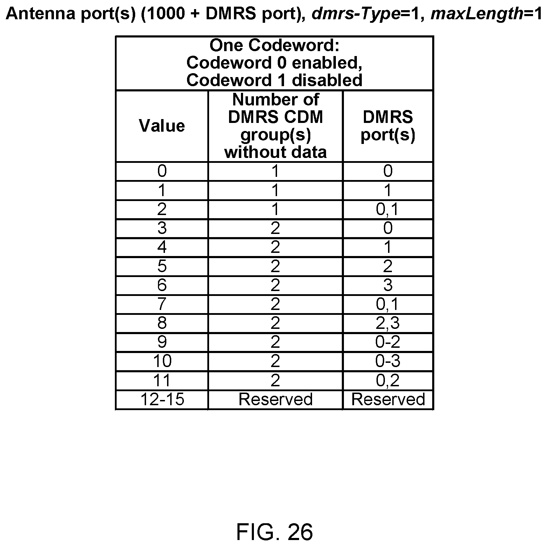

An antenna port table of an existing system (e.g., Rel. 17) can indicate only the number of CDM groups ≤ 2 for DMRS configuration type 1 and only the number of CDM groups ≤ 3 for DMRS configuration type 2. FIG. 26 shows an example of an existing antenna port table for PDSCH, DMRS configuration type = 1, and DMRS maximum length = 1.

With expansion of the number of layers/ports, it may be supported to indicate the number of CDM groups > 2 for DMRS configuration type 1 and indicate the number of CDM groups > 3 for DMRS configuration type 2. When a CDM group list/CDM group subset is introduced/supported, the number of CDM groups of DMRS without data may be interpreted as follows.

For DMRS type 1 (or DMRS configuration type 1), "number of DMRS CDM group(s) without data" = 1 may mean that another CDM group is used for data transmission of a scheduled UE. In this case, the UE may be a UE that is not co-scheduled (e.g., no co-scheduled UE).

For DMRS type 1 (or DMRS configuration type 1), "number of DMRS CDM group(s) without data" = 2 may mean that another CDM group is not used for data transmission of the scheduled UE. In this case, when the scheduled UE uses one CDM group, another CDM group may be available to the UE that is not co-scheduled (e.g., no co-scheduled UE).

When a CDM group list/CDM group subset is introduced/supported, the number of CDM groups of the DMRS without data may refer to the number of CDM groups in each CDM group list/each CDM group subset.

With this, even when a CDM group list/CDM group subset is introduced/supported, it is possible to appropriately judge the number of CDM groups of DMRS without data.

### <Supplements>

### [Report of Information to UE]

Notification of any information to a UE (from a network (NW) (for example, a base station (BS))) (in other words, reception of any information in the UE from the BS) may be performed by using physical layer signaling (for example, DCI), higher layer signaling (for example, RRC signaling, MAC CE), or a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits included in the DCI, the format of the DCI, or the like.

Notification of any information to a UE in the above-described embodiments may be performed periodically, semipersistently, or aperiodically.

### [Report of Information from UE]

Notification of any information from a UE (to an NW) (in other words, transmission/reporting of any information in the UE to the BS) in the above-described embodiments may be performed by using physical layer signaling (for example, UCI), higher layer signaling (for example, RRC signaling, MAC CE), or a specific signal/channel (for example, a PUCCH, a PUSCH, a PRACH, a reference signal), or a combination of these.

When the notification is performed by a MAC CE, the MAC CE may be identified by a new LCID not defined in an existing standard being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### [Application of Each Embodiment]

At least one of the above-described embodiments may be applied when a specific condition is satisfied. The specific condition may be defined in a standard, or the UE/BS may be notified of the condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information for at least one of the embodiments above
- supporting of CDM group lists or CDM group subsets

The specific UE capability may be a capability applied over all the frequencies (in common irrespective of frequency), a capability for each frequency (for example, one of or a combination of cell, band, band combination, BWP, component carrier, and the like), a capability for each frequency range (for example, Frequency Range 1 (FR1), FR2, FR3, FR4, FR5, FR2-1, and FR2-2), a capability for each subcarrier spacing (SCS), or a capability for each Feature Set (FS) or Feature Set Per Componentcarrier (FSPC).

The specific UE capability may be a capability applied for all duplex schemes (in common irrespective of duplex scheme) or a capability for each duplex scheme (for example, time division duplex (TDD), frequency division duplex (FDD)).

At least one of the above-described embodiments may be applied when specific information related to the above-described embodiment (or carrying out the operation of the above-described embodiment) is configured/activated/triggered for a UE by higher layer signaling/physical layer signaling.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including a receiving section that receives downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH), and a control section that determines, based on the downlink control information, a DMRS associated with a PTRS shared by three or more PUSCH antenna ports in the TPMI or a DMRS associated with a PTRS shared by PUSCH antenna ports in each CDM group subset in the TPMI.

### {Supplementary Note 2}

The terminal according to supplementary note 1, wherein when the downlink control information includes information indicating the CDM group subset ID, the control section determines the DMRS associated with the PTRS, based on the information indicating the CDM group subset ID and information indicated by the second field.

### {Supplementary Note 3}

The terminal according to supplementary note 1 or 2, wherein for the PTRS port, an associated DMRS port is indicated from a subset of scheduled DMRS ports.

### {Supplementary Note 4}

The terminal according to any one of supplementary notes 1 to 3, wherein a configuration of different numbers of PTRS ports is supported for different coherent assumptions.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

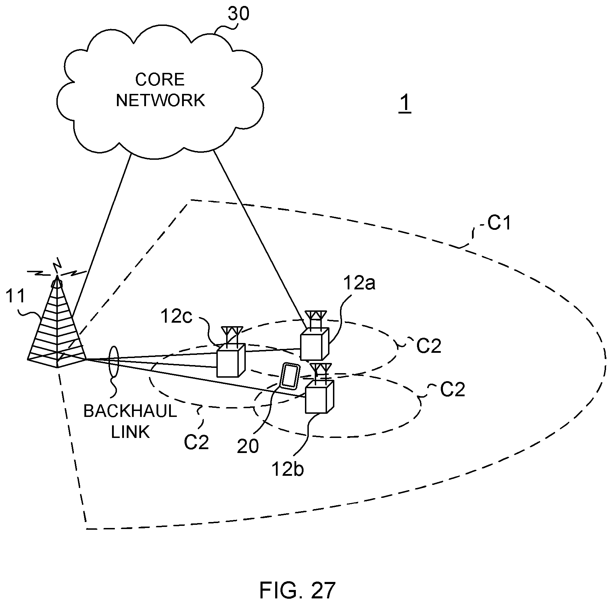

FIG. 27 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include, for example, network functions (NF) such as a User Plane Function (UPF), an Access and Mobility Management Function (AMF), a Session Management Function (SMF), Unified Data Management (UDM), an Application Function (AF), a Data Network (DN), a Location Management Function (LMF), and Operation, Administration, and Maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block **(SSB),"** and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

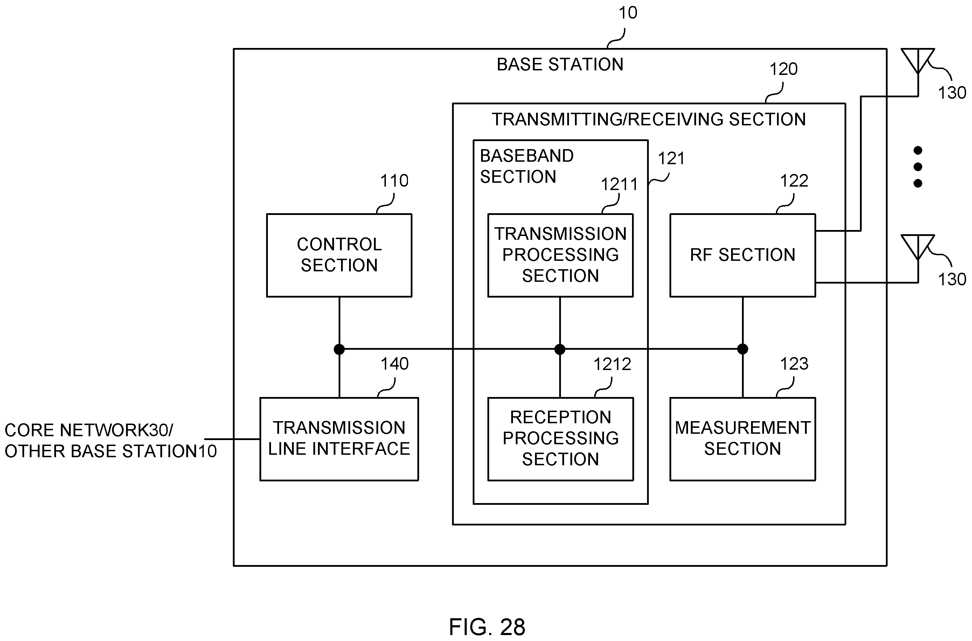

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (e.g., a network node providing an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH).

The control section 110 may control, by using the downlink control information, to indicate a DMRS associated with a PTRS shared by three or more (or four or more) PUSCH antenna ports in the TPMI or a DMRS associated with a PTRS shared by PUSCH antenna ports in each CDM group subset in the TPMI.

### (User Terminal)

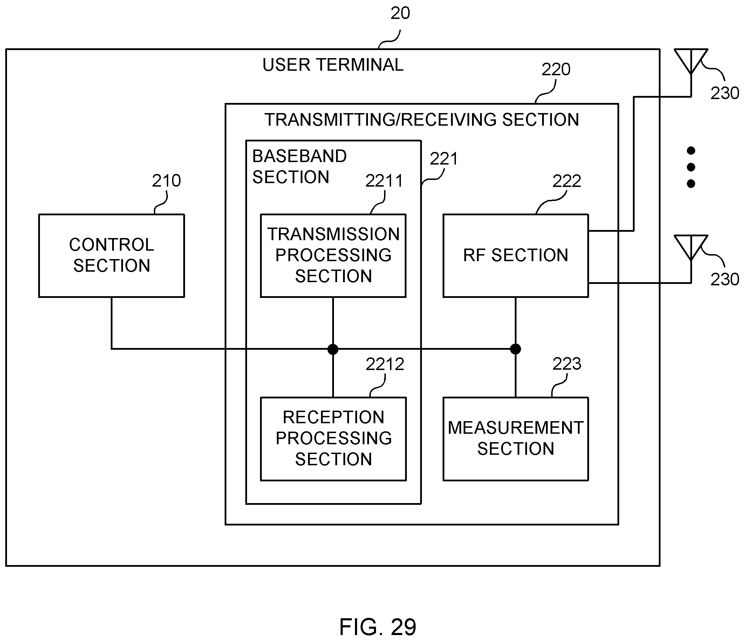

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH).

The control section 210 may determine, based on the downlink control information, a DMRS associated with a PTRS shared by three or more (or four or more) PUSCH antenna ports in the TPMI or a DMRS associated with a PTRS shared by PUSCH antenna ports in each CDM group subset in the TPMI.

When the downlink control information includes information indicating the CDM group subset ID, the control section may determine the DMRS associated with the PTRS, based on the information indicating the CDM group subset ID and information indicated by the second field.

For the PTRS port, an associated DMRS port may be indicated from a subset of scheduled DMRS ports.

A configuration of different numbers of PTRS ports may be supported for different coherent assumptions.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

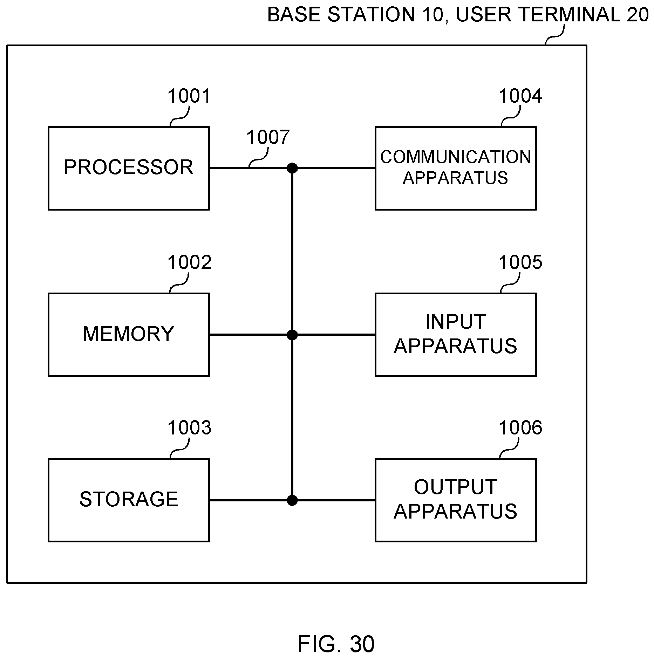

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

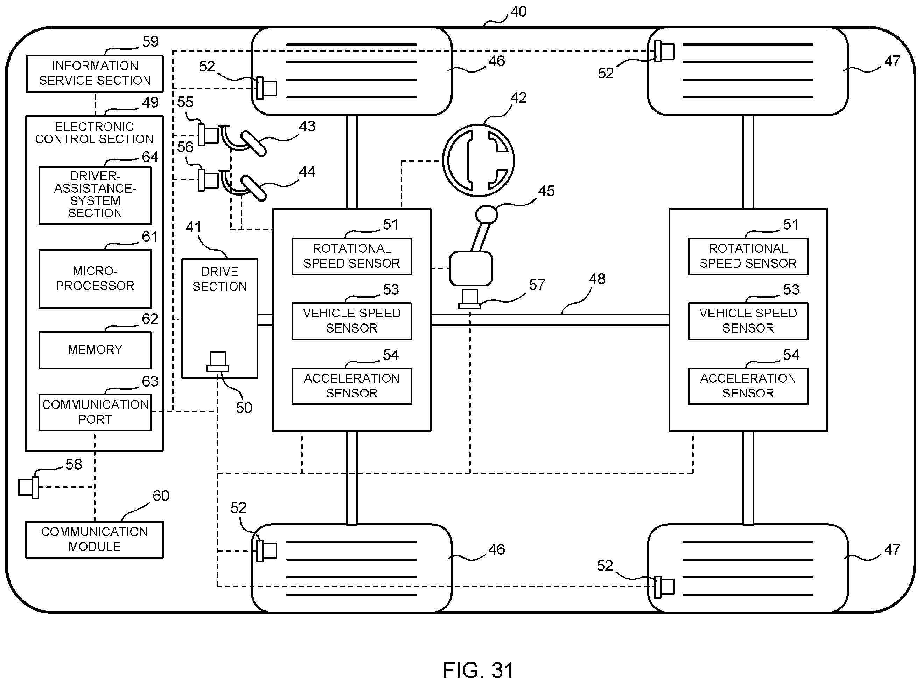

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH); and
a control section that determines, based on the downlink control information, a DMRS associated with a PTRS shared by three or more PUSCH antenna ports in the TPMI or a DMRS associated with a PTRS shared by PUSCH antenna ports in each CDM group subset in the TPMI.

2. The terminal according to claim 1, wherein
when the downlink control information includes information indicating a CDM group subset ID, the control section determines the DMRS associated with the PTRS, based on the information indicating the CDM group subset ID and information indicated by the second field.

3. The terminal according to claim 1, wherein
for the PTRS port, an associated DMRS port is indicated from a subset of scheduled DMRS ports.

4. The terminal according to claim 1, wherein
a configuration of different numbers of PTRS ports is supported for different coherent assumptions.

5. A radio communication method for a terminal, the radio communication method comprising:
receiving downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH); and
determining, based on the downlink control information, a DMRS associated with a PTRS shared by three or more PUSCH antenna ports in the TPMI or a DMRS associated with a PTRS shared by PUSCH antenna ports in each CDM group subset in the TPMI.

6. A base station comprising:
a transmitting section that transmits downlink control information including a first field indicating a transmission precoding matrix indicator (TPMI) and a second field indicating an association between a port of an uplink phase tracking reference signal (PTRS) and a port of a demodulation reference signal (DMRS) for an uplink shared channel (PUSCH); and
a control section that controls, by using the downlink control information, to indicate a DMRS associated with a PTRS shared by three or more PUSCH antenna ports in the TPMI or a DMRS associated with a PTRS shared by PUSCH antenna ports in each CDM group subset in the TPMI.
